(19) Europäisches Patentamt
European Patent Office
Office européen des brevets

(11) EP 4 429 353 A1

(12) **EUROPEAN PATENT APPLICATION**
published in accordance with Art. 153(4) EPC

(43) Date of publication:
11.09.2024 Bulletin 2024/37

(21) Application number: 21962959.9

(22) Date of filing: 05.11.2021

(51) International Patent Classification (IPC):
*H04W 72/04* (2023.01)

(52) Cooperative Patent Classification (CPC):
H04B 1/713; H04W 72/04

(86) International application number:
PCT/CN2021/129061

(87) International publication number:
WO 2023/077446 (11.05.2023 Gazette 2023/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Beijing Xiaomi Mobile Software Co.,
Ltd.
Beijing 100085 (CN)

(72) Inventor: MU, Qin
Beijing 100085 (CN)

(74) Representative: Stöckeler, Ferdinand et al
Schoppe, Zimmermann, Stöckeler
Zinkler, Schenk & Partner mbB
Patentanwälte
Radlkoferstrasse 2
81373 München (DE)

(54) **METHOD AND APPARATUS FOR DETERMINING PHYSICAL UPLINK CONTROL CHANNEL RESOURCES, AND STORAGE MEDIUM**

(57) The present disclosure relates to a method and apparatus for determining PUCCH resources, and a storage medium. The method for determining PUCCH resources comprises: acquiring PUCCH resources configured in a first BWP, the first BWP being configured to enable frequency-hopping transmission of the PUCCH resources, or to disable the frequency-hopping transmission of the PUCCH resources; and determining an index of a physical resource block (PRB) bearing the PUCCH resources. By means of the present disclosure, the allocation of a PUCCH PRB for the first BWP and the confirmation of the index of the PRB can be achieved, and thus configuration enhancement of the PUCCH resources in the BWP is achieved.

obtain a PUCCH resource configured in a first BWP, in which a frequency hopping for PUCCH transmission in the first BWP is configured to be enabled or disabled — S11

determine a PRB index of a PRB bearing the PUCCH resource — S12

**FIG. 2**

## Description

### TECHNICAL FIELD

The disclosure relates to the field of communication technologies, and in particular, to methods and devices for determining a Physical Uplink Control Channel (PUCCH) resource and a related storage medium.

### BACKGROUND

In the related art, in order to support Internet of Things services, two technologies, Machine Type Communication (MTC) and Narrowband Internet of Things (NB-IoT), have been proposed. These two technologies are mainly aimed at low-speed and high-latency scenarios, such as meter reading, environmental monitoring and other scenarios. The NB-IoT currently only supports a maximum rate of a few hundred k, and the MTC currently only supports a maximum rate of a few M. With the continuous development of the IoT business, such as video surveillance, smart home, wearable devices, industrial sensor monitoring and other services are popular. These services usually require a rate of tens to 100M and also have relatively high requirements for delay. Therefore, the MTC and the NB-IoT technologies in the related art are difficult to meet the requirements. Therefore, it is proposed to design a new terminal type in 5G New Radio (NR) to cover mid-end IoT devices. In the current 3GPP standardization, this new terminal type is called a low-capability terminal, sometimes also called a Reduced capability UE, a Redcap terminal or NR-lite for short. The Redcap terminal is relative to the normal terminal.

In the related art, in the NR system, an Initial uplink bandwidth part (Initial UL BWP) is defined, and the Physical Uplink Control Channel (PUCCH) bearing Hybrid Automatic Repeat ReQuest (HARQ) feedback information is configured on the Initial UL BWP. Considering factors such as the constraint on the terminal bandwidth, TDD center frequency-alignment and Synchronization Signal and PBCH block (SSB) overhead, it is necessary to configure a separate Initial UL BWP for the RedCap terminal.

### SUMMARY

In order to overcome the problem existing in the related art, the disclosure provides methods and devices for determining a Physical Uplink Control Channel (PUCCH) resource and a related storage medium.

According to a first aspect of embodiments of the disclosure, there is provided a method for determining a PUCCH resource. The method is performed by a terminal and includes: obtaining a PUCCH resource configured in a first bandwidth part (BWP), in which a frequency hopping for PUCCH transmission in the first BWP is configured to be enabled or disable; and determining a Physical Resource Block (PRB) index of a PRB bearing the PUCCH resource.

In an embodiment, the frequency hopping for the PUCCH transmission in the first BWP is configured to be disabled and determining the PRB index of the PRB bearing the PUCCH resource includes:

obtaining first parameters, in which the first parameters include at least one of a PUCCH resource index, a resource amount on the first BWP, a number of cyclic shift sequences, or a PRB resource offset; and determining the PRB index bearing the PUCCH resource based on the first parameters.

In an embodiment, the first parameters include a PUCCH resource index; and obtaining the first parameters include: obtaining information of a downlink control channel sent by the network device, and determining the PUCCH resource index based on the information of the downlink control channel; in which the downlink control channel information includes at least one of control channel element (CCE) information occupied by the downlink control channel or PUCCH resource allocation information included in a Physical Downlink Control Channel (PDCCH).

In an embodiment, the first parameters include at least one of the resource amount on the first BWP, the number of cyclic shift sequences, or the PRB resource offset; and obtaining the first parameters include: obtaining a higher-layer signaling sent by a network device, in which the higher-layer signaling configures at least one of the amount resource on the first BWP, the number of cyclic shift sequences, or the PRB resource offset.

In an embodiment, the higher-layer signaling configures a first resource configuration set, and the first resource configuration set includes a resource configuration set index, a PUCCH format, a first time domain symbol of the PUCCH resource, and a number of symbols occupied by the PUCCH resource, a first PRB resource offset, and a cyclic shift sequence index.

In an embodiment, the higher-layer signaling configures a second resource configuration set and a second PRB resource offset, in which the second resource configuration set includes a resource configuration set index, a PUCCH format, and a first time domain symbol of the PUCCH resource, a number of symbols occupied by the PUCCH resource, and the cyclic shift sequence index.

In an embodiment, the first parameters include a PUCCH resource index, the number of cyclic shift sequences, and a PRB resource offset.

In an embodiment, the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor r_{PUCCH} / N_{CS} \right\rfloor;$$

where $\text{Index}_{PRB}$ represents the PRB index, $RB_{BWP}^{\text{offset}}$ represents the PRB resource offset, $r_{PUCCH}$ represents the PUCCH resource index, $N_{CS}$ represents the number of cyclic shift sequences, and $\lfloor \rfloor$ represents a rounding down operation.

In an embodiment, the first parameters include the PUCCH resource index, the resource amount on the first BWP, the number of cyclic shift sequences, and the PRB resource offset.

In an embodiment, the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor r_{PUCCH} / N_{CS} \right\rfloor;$$

where, $\text{Index}_{PRB}$ represents the PRB index, $N_{BWP}^{\text{size}}$ represents the resource amount on the first BWP, $RB_{BWP}^{\text{offset}}$ represents the PRB resource offset, $r_{PUCCH}$ represents the PUCCH resource index, $N_{CS}$ represents the number of cyclic shift sequences, and $\lfloor \rfloor$ represents a rounding down operation.

In an embodiment, the method further includes: obtaining a second parameter, in which the second parameter includes an indicator of the PRB index of the PRB bearing the PUCCH resource.

In an embodiment, the first BWP is located within a bandwidth range of a second BWP, a difference between a starting position of the first BWP and a starting position of the second BWP is less than a preset threshold, and the indicator of the PRB index of the PRB bearing the PUCCH resource indicates a first preset value.

In an embodiment, the first BWP is located within a bandwidth range of a second BWP, a difference between an end position of the first BWP and an end position of the second BWP is less than a preset threshold, and the indicator of the PRB index of the PRB bearing the PUCCH resource indicates a second preset value.

In an embodiment, the method further includes: determining the cyclic shift sequence index based on the PUCCH resource index and the number of cyclic shift sequences.

In an embodiment, the cyclic shift sequence index, the PUCCH resource index, and the number of cyclic shift sequences satisfy the following relationship:

$$\text{Index}_{CS} = r_{PUCCH} \bmod N_{CS};$$

where, $\text{Index}_{CS}$ represents the cyclic shift sequence index, $r_{PUCCH}$ represents the PUCCH resource index, and $N_{CS}$ represents the number of cyclic shift sequences.

In an embodiment, the first BWP is at least used for random access, and the PUCCH resource is at least used for bearing a Hybrid Automatic Repeat Request (HARQ) feedback of message 4 in four-step random access and/or bearing a HARQ feedback of message B in two-step random access.

In an embodiment, the frequency hopping for the PUCCH transmission in the first BWP is configured to be enabled, and the PRB index of the PRB bearing the PUCCH resource is same as the PRB index of the PUCCH resource configured in the second BWP; the second BWP is different from the first BWP and the frequency hopping for the PUCCH transmission in the second BWP is configured to be enabled by default.

According to a second aspect of embodiments of the disclosure, a method for determining a Physical Uplink Control Channel (PUCCH) resource is provided. The method is performed by a network device and includes: configuring the PUCCH resource in a first Bandwidth Part (BWP), in which a frequency hopping for the PUCCH transmission in the first BWP is configured to be enabled or disabled; and determining a Physical Resource Block (PRB) index of a PRB bearing the PUCCH resource.

In an embodiment, the frequency hopping for the PUCCH transmission in the first BWP is configured to be disabled, and determining the PRB index of the PRB bearing the PUCCH resource includes: sending first parameters, in which the first parameters include at least one of a PUCCH resource index, a resource amount on the first BWP, a number of cyclic shift sequences, or a PRB resource offset; and determining the PRB index of the PRB bearing the PUCCH resource based on the first parameters.

In an embodiment, the first parameters include the PUCCH resource index; and sending the first parameters include sending information of a downlink control channel and determining the PUCCH resource index based on the information of the downlink control channel; in which the information of the downlink control channel includes at least one of information of a control channel element (CCE) occupied by the downlink control channel or PUCCH resource allocation information included in a Physical Downlink Control Channel (PDCCH).

In an embodiment, the first parameters include at least one of the resource amount on the first BWP, the number of cyclic shift sequences, or the PRB resource offset; and sending the first parameters include: sending a higher-layer signaling, in which the higher-layer signaling configures at least one of the resource amount on the first BWP, the number of cyclic shift sequences, or the PRB resource offset.

In an embodiment, the higher-layer signaling configures a first resource configuration set, and the first resource configuration set includes a resource configuration set index, a PUCCH format, a first time domain symbol of the PUCCH resource, a number of symbols occupied by the PUCCH resource, a first PRB resource offset, and a cyclic shift sequence index.

In an embodiment, the higher-layer signaling configures a second resource configuration set and a second PRB resource offset, and the second resource configuration set includes a resource configuration set index, a PUCCH format, and a first time domain symbol of the PUCCH resource, a number of symbols occupied by the PUCCH resource, and a cyclic shift sequence index.

In an embodiment, the first parameters include the PUCCH resource index, the number of cyclic shift sequences, and the PRB resource offset.

In an embodiment, the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor r_{PUCCH} / N_{CS} \right\rfloor ;$$

where, Index$_{PRB}$ represents the PRB index, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents a rounding down operation.

In an embodiment, the first parameters include the PUCCH resource index, the resource amount on the first BWP, the number of cyclic shift sequences, and the PRB resource offset.

In an embodiment, the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor r_{PUCCH} / N_{CS} \right\rfloor ;$$

where, Index$_{PRB}$ represents the PRB index, $N_{BWP}^{\text{size}}$ represents the resource amount on the first BWP, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents a rounding down operation.

In an embodiment, the method further includes sending a second parameter, in which the second parameter includes an indicator of the PRB index of the PRB bearing the PUCCH resource.

In an embodiment, the first BWP is located within a bandwidth range of a second BWP, an difference between a starting position of the first BWP and a starting position of the second BWP is less than a preset threshold, and the indicator of the PRB index of the PRB bearing the PUCCH resource indicates a first preset value.

In an embodiment, the first BWP is located within a bandwidth range of a second BWP, an difference between an end position of the first BWP and an end position of the second BWP is less than a preset threshold, and the indicator of the PRB index of the PRB bearing the PUCCH resource indicates a second preset value.

In an embodiment, the method further includes: determining the cyclic shift sequence index based on the PUCCH resource index and the number of cyclic shift sequences.

In an embodiment, the cyclic shift sequence index, the PUCCH resource index, and the number of cyclic shift sequences satisfying the following relationship:

$$\text{Index}_{CS} = r_{PUCCH} \bmod N_{CS} ;$$

where, Index$_{CS}$ represents the cyclic shift sequence index, r$_{PUCCH}$ represents the PUCCH resource index, and $N_{CS}$ represents the number of cyclic shift sequences.

In an embodiment, the first BWP is at least used for random access, and the PUCCH resource is at least used for bearing a Hybrid Automatic Repeat Request (HARQ) feedback of message 4 in a four-step random access and/or bearing a HARQ feedback of message B in a two-step random access.

In an embodiment, the frequency hopping for the PUCCH transmission in the first BWP is configured to be enabled, and the PRB index of the PRB bearing the PUCCH resource is same as the PRB index of the PUCCH resource configured in the second BWP; the second BWP is different from the first BWP and the frequency hopping for the PUCCH transmission in the second BWP is configured to be enabled by default.

According to a third aspect of embodiments of the disclosure, an apparatus for determining a Physical Uplink Control Channel (PUCCH) resource is provided. The apparatus is applied to a terminal and includes:

an obtaining unit, configured to obtain a PUCCH resource configured in a first Bandwidth Part (BWP), in which a frequency hopping for the PUCCH transmission in the first BWP is configured to be enabled or disabled; and a processing unit, configured to determine a Physical Resource Block (PRB) index of a PRB bearing the PUCCH resource.

In an embodiment, the frequency hopping for the PUCCH transmission in the first BWP is configured to be disabled, and the obtaining unit is configured to obtain first parameters, in which the first parameters include at least one of a PUCCH resource index, a resource amount on the first BWP, a number of cyclic shift sequences, or a PRB resource offset. The processing unit is configured to determine the PRB index of the PRB bearing the PUCCH resource based on the first parameters.

In an embodiment, the first parameters include the PUCCH resource index; and the obtaining unit is configured to obtain information of a downlink control channel sent by a network device and determine the PUCCH resource index based on the information of the downlink control channel; in which the information of the downlink control channel includes at least one of information of a control channel element (CCE) occupied by the downlink control channel or PUCCH resource allocation information included in a Physical Downlink Control Channel (PDCCH).

In an embodiment, the first parameters include at least one of the resource amount on the first BWP, the number of cyclic shift sequences, or the PRB resource offset; and the obtaining unit is configured to obtain a higher-layer signaling sent by a network device, in which the higher-layer signaling configures at least one of the resource amount on the first BWP, the number of cyclic shift sequences, or the PRB resource offset.

In an embodiment, the higher-layer signaling configures a first resource configuration set, in which the first resource configuration set includes a resource configuration set index, a PUCCH format, a first time domain symbol of the PUCCH resource, a number of symbols occupied by the PUCCH resource, a first PRB resource offset, and a cyclic shift sequence index.

In an embodiment, the higher-layer signaling configures a second resource configuration set and a second PRB resource offset, in which the second resource configuration set includes a resource configuration set index, a PUCCH format, and a first time domain symbol occupied by the PUCCH resource, a number of symbols occupied by the PUCCH resource, and a cyclic shift sequence index.

In an embodiment, the first parameters include the PUCCH resource index, the number of cyclic shift sequences, and the PRB resource offset.

In an embodiment, the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor \text{r}_{PUCCH} / N_{CS} \right\rfloor;$$

where, Index$_{PRB}$ represents the PRB index, $RB_{BWP}^{\text{offset}}$ represents the PRB resource offset, r$_{PUCCH}$ represents the PUCCH resource index, $N_{CS}$ represents the number of cyclic shift sequences, and $\lfloor \rfloor$ represents a rounding down operation.

In an embodiment, the first parameters include the PUCCH resource index, the resource amount on the first BWP, the number of cyclic shift sequences, and the PRB resource offset.

In an embodiment, the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor \text{r}_{PUCCH} / N_{CS} \right\rfloor;$$

where, Index$_{PRB}$ represents the PRB index, $N_{BWP}^{size}$ represents the resource amount on the first BWP, $RB_{BWP}^{offset}$ represents the PRB resource offset, r$_{PUCCH}$ represents the PUCCH resource index, $N_{CS}$ represents the number of cyclic shift sequences, and ⌊ ⌋ represents a rounding down operation.

In an embodiment, the obtaining unit is further configured to obtain a second parameter, in which the second parameter includes an indicator of the PRB index of the PRB bearing the PUCCH resource.

In an embodiment, the first BWP is located within a bandwidth range of the second BWP, a difference between a starting position of the first BWP and a starting position of the second BWP is less than a preset threshold, and the indicator of the PRB index of the PRB bearing the PUCCH resource indicates a first preset value.

In an embodiment, the first BWP is located within a bandwidth range of the second BWP, a difference between an end position of the first BWP and an end position of the second BWP is less than a preset threshold, and the indicator of the PRB index of the PRB bearing the PUCCH resource indicates a second preset value.

In an embodiment, the processing unit is further configured to determine the cyclic shift sequence index based on the PUCCH resource index and the number of cyclic shift sequences.

In an embodiment, the cyclic shift sequence index, the PUCCH resource index, and the number of cyclic shift sequences satisfy the following relationship:

$$\text{Index}_{CS} = \text{r}_{PUCCH} \bmod N_{CS};$$

where, Index$_{CS}$ represents the cyclic shift sequence index, r$_{PUCCH}$ represents the PUCCH resource index, and $N_{CS}$ represents the number of cyclic shift sequences.

In an embodiment, the first BWP is at least used for random access, and the PUCCH resource is at least used for bearing a Hybrid Automatic Repeat Request (HARQ) feedback of message 4 in a four-step random access and/or bearing a HARQ feedback of message B in a two-step random access.

In an embodiment, the frequency hopping for the PUCCH transmission in the first BWP is configured to be enabled or disabled, and the PRB index of the PRB bearing the PUCCH resource is same as the PRB index of the PUCCH resource configured in the second BWP; the second BWP is different from the first BWP and the frequency hopping for the PUCCH transmission in the second BWP is configured to be enabled by default.

According to a fourth aspect of embodiments of the disclosure, an apparatus for determining a Physical Uplink Control Channel (PUCCH) resource is provided. The apparatus is applied to a network device and includes:

a sending unit, configured to configure the PUCCH resource in a first Bandwidth Part (BWP), in which a frequency hopping for the PUCCH transmission in the first BWP is configured to be enabled or disabled; and a processing unit, configured to determine a Physical Resource Block (PRB) index of a PRB bearing the PUCCH resource.

In an embodiment, the frequency hopping for the PUCCH transmission in the first BWP is configured to be disabled, and the sending unit is configured to send first parameters, in which the first parameters include at least one of a PUCCH resource index, a resource amount on the first BWP, a number of cyclic shift sequences, or a PRB resource offset; and the processing unit is configured to determine the PRB index of the PRB bearing the PUCCH resource based on the first parameters.

In an embodiment, the first parameters include the PUCCH resource index; and the sending unit is configured to send information of a downlink control channel and determine the PUCCH resource index based on the information of the downlink control channel; in which the information of the downlink control channel includes at least one of information of a control channel element (CCE) occupied by the downlink control channel or PUCCH resource allocation information included in a Physical Downlink Control Channel (PDCCH).

In an embodiment, the first parameters include at least one of the resource amount on the first BWP, the number of cyclic shift sequences, or the PRB resource offset; and the sending unit is configured to send a higher-layer signaling, and the higher-layer signaling configures at least one of the resource amount on the first BWP, the number of cyclic shift sequences, or the PRB resource offset.

In an embodiment, the higher-layer signaling configures a first resource configuration set, in which the first resource configuration set includes a resource configuration set index, a PUCCH format, a first time domain symbol of the PUCCH resource, a number of symbols occupied by the PUCCH resource, a first PRB resource offset, and a cyclic shift sequence index.

In an embodiment, the higher-layer signaling configures a second resource configuration set and a second PRB resource offset, in which the second resource configuration set includes a resource configuration set index, a PUCCH format, and a first time domain symbol occupied by the PUCCH resource, the number of symbols occupied by the PUCCH resource, and the cyclic shift sequence index.

In an embodiment, the first parameters include the PUCCH resource index, the number of cyclic shift sequences, and the PRB resource offset.

In an embodiment, the PRB index of the PRB bearing the PUCCH resource, the PUCCH resource index, the number of cyclic shift sequences, and the PRB resource offset satisfy the following relationship:

$$\mathrm{Index}_{PRB} = RB_{BWP}^{\mathrm{offset}} + \left\lfloor \mathrm{r}_{PUCCH} / N_{CS} \right\rfloor,$$

where, $\mathrm{Index}_{PRB}$ represents the PRB index, $RB_{BWP}^{\mathrm{offset}}$ represents the PRB resource offset, $\mathrm{r}_{PUCCH}$ represents the PUCCH resource index, $N_{CS}$ represents the number of cyclic shift sequences, and $\lfloor \ \rfloor$ represents a rounding down operation.

In an embodiment, the first parameters include the PUCCH resource index, the resource amount on the first BWP, the number of cyclic shift sequences, and the PRB resource offset.

In an embodiment, the PRB index of the PRB bearing the PUCCH resource, the PUCCH resource index, the resource amount on the first BWP, the number of cyclic shift sequences, and the PRB resource offset satisfy the following relationship:

$$\mathrm{Index}_{PRB} = N_{BWP}^{\mathrm{size}} - 1 - RB_{BWP}^{\mathrm{offset}} - \left\lfloor \mathrm{r}_{PUCCH} / N_{CS} \right\rfloor,$$

where, $\mathrm{Index}_{PRB}$ represents the PRB index, $N_{BWP}^{\mathrm{size}}$ represents the resource amount on the first BWP, $RB_{BWP}^{\mathrm{offset}}$ represents the PRB resource offset, $\mathrm{r}_{PUCCH}$ represents the PUCCH resource index, $N_{CS}$ represents the number of cyclic shift sequences, and $\lfloor \ \rfloor$ represents a rounding down operation.

In an embodiment, the sending unit is configured to sends a second parameter, in which the second parameter includes an indicator of the PRB index of the PRB bearing the PUCCH resource.

In an embodiment, the first BWP is located within a bandwidth range of the second BWP, a difference between a starting position of the first BWP and a starting position of the second BWP is less than a preset threshold, and the indicator of the PRB index of the PRB bearing the PUCCH resource indicates a first preset value.

In an embodiment, the first BWP is located within a bandwidth range of the second BWP, a difference between an end position of the first BWP and an end position of the second BWP is less than a preset threshold, and the indicator of the PRB index of the PRB bearing the PUCCH resource indicates a second preset value.

In an embodiment, the processing unit is further configured to determine the cyclic shift sequence index based on the PUCCH resource index and the number of cyclic shift sequences.

In an embodiment, the cyclic shift sequence index, the PUCCH resource index, and the number of cyclic shift sequences satisfy the following relationship:

$$\mathrm{Index}_{CS} = \mathrm{r}_{PUCCH} \bmod N_{CS},$$

where, $\mathrm{Index}_{CS}$ represents the cyclic shift sequence index, $\mathrm{r}_{PUCCH}$ represents the PUCCH resource index, and $N_{CS}$ represents the number of cyclic shift sequences.

In an embodiment, the first BWP is at least used for random access, and the PUCCH resource is at least used for bearing a Hybrid Automatic Repeat Request (HARQ) feedback of message 4 in a four-step random access and/or bearing a HARQ feedback of message B in a two-step random access.

In an embodiment, the frequency hopping for the PUCCH transmission in the first BWP is configured to be enabled, the PRB index of the PRB bearing the PUCCH resource is same as the PRB index of the PUCCH resource configured in the second BWP, and the second BWP is different from the first BWP and the frequency hopping for the PUCCH transmission in the second BWP is configured to be enabled by default.

According to a fifth aspect of embodiments of the disclosure, a device for determining a Physical Uplink Control Channel (PUCCH) resource is provided. The device includes:

   a processor and a memory for storing instructions executable by the processor;
   in which the processor is configured to perform the method according to the first aspect or any embodiment in the first aspect.

According to a sixth aspect of embodiments of the disclosure, a device for determining a Physical Uplink Control Channel (PUCCH) resource is provided. The device includes:

a processor and a memory for storing instructions executable by the processor;

in which the processor is configured to perform the method according to the second aspect or any embodiment in the second aspect.

According to a seventh aspect of embodiments of the disclosure, a storage medium is provided. The storage medium has instructions stored thereon. When the instructions in the storage medium are executed by a processor of a terminal, the terminal is caused to perform the method according to the first aspect or any embodiment in the first aspect.

According to an eighth aspect of embodiments of the disclosure, a storage medium is provided. The storage medium has instructions stored thereon. When the instructions in the storage medium are executed by a processor of a network device, the network device is caused to perform the method according to the second aspect or any embodiment in the first second.

The technical solutions according to embodiments of the disclosure may achieve the following beneficial effects. For the first BWP within which the frequency hopping for the PUCCH transmission may be configured to be enabled or disabled, the PRB index of the PRB bearing the PUCCH resource is determined. Therefore, the allocation of the PUCCH PRB and the confirmation of the PRB index are realized for the first BWP, and the configuration enhancement is realized for the PUCCH resource in the BWP.

It is understandable that both the foregoing general description and the following detailed description are illustrative and explanatory only and are not restrictive of the disclosure.

## BRIEF DESCRIPTION OF THE DRAWINGS

The accompanying drawings, which are incorporated in and constitute a part of this specification, illustrate embodiments consistent with the disclosure and together with the description serve to explain the principles of the disclosure.

FIG. 1 is a schematic diagram illustrating a wireless communication system according to an embodiment.

FIG. 2 is a flowchart illustrating a method for determining a Physical Uplink Control Channel (PUCCH) resource according to an embodiment.

FIG. 3 is a flowchart illustrating a method for determining a PUCCH resource on a first Bandwidth Part (BWP) within which a frequency hopping for PUCCH transmission is disabled according to an embodiment.

FIG. 4 is a flowchart illustrating a method for determining a PUCCH resource on a first BWP within which a frequency hopping for PUCCH transmission is disabled according to an embodiment.

FIG. 5 is a flowchart illustrating a method for determining a PUCCH resource on a first BWP within which a frequency hopping for PUCCH transmission is disabled according to an embodiment.

FIG. 6 is a flowchart illustrating a method for determining a PUCCH resource on a first BWP within which a frequency hopping for PUCCH transmission is disabled according to an embodiment.

FIG. 7 is a flowchart illustrating a method for determining a PUCCH resource on a first BWP within which a frequency hopping for PUCCH transmission is disabled according to an embodiment.

FIG. 8 is a flowchart illustrating a method for determining a PUCCH resource on a first BWP within which a frequency hopping for PUCCH transmission is disabled according to an embodiment.

FIG. 9 is a flowchart illustrating a method for determining a PUCCH resource on a first BWP within which a frequency hopping for PUCCH transmission is disabled according to an embodiment.

FIG. 10 is a flowchart illustrating a method for determining a PUCCH resource on a first BWP within which a frequency hopping for PUCCH transmission is disabled according to an embodiment.

FIG. 11 is a flowchart illustrating a method for determining a PUCCH resource according to an embodiment.

FIG. 12 is a flowchart illustrating a method for determining a PUCCH resource on a first BWP within which a frequency hopping for PUCCH transmission is disabled according to an embodiment.

FIG. 13 is a flowchart illustrating a method for determining a PUCCH resource on a first BWP within which a frequency hopping for PUCCH transmission is disabled according to an embodiment

FIG. 14 is a block diagram illustrating an apparatus for determining a PUCCH resource according to an embodiment.

FIG. 15 is a block diagram illustrating an apparatus for determining a PUCCH resource according to an embodiment.

FIG. 16 is a block diagram illustrating a device for determining a PUCCH resource according to an embodiment.

FIG. 17 is a block diagram illustrating a device for determining a PUCCH resource according to an embodiment.

## DETAILED DESCRIPTION

Reference will now be made in detail to embodiments, examples of which are illustrated in the accompanying drawings. When the following description refers to the accompanying drawings, the same numerals in different drawings refer to the same or similar elements unless otherwise indicated. The implementations described in following examples do not represent all implementations consistent with the disclosure.

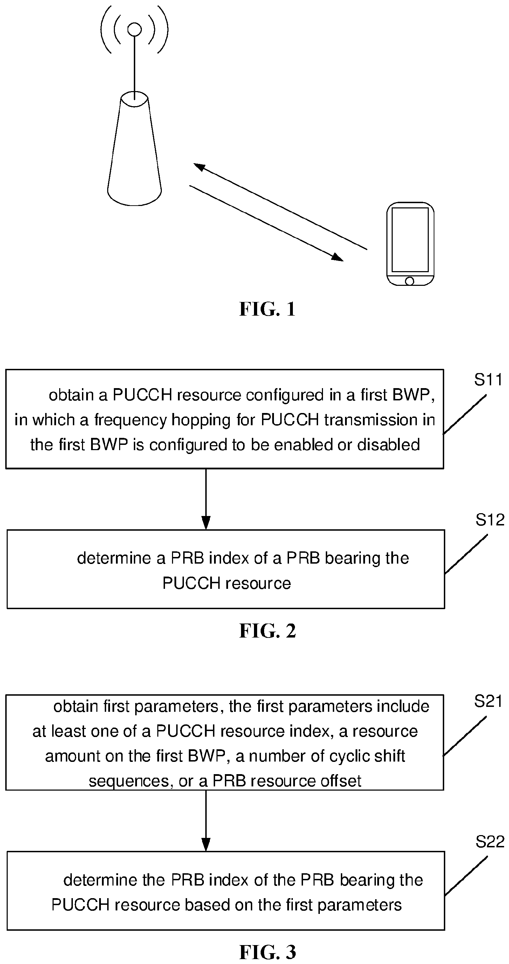

The method for determining a Physical Uplink Control Channel (PUCCH) resource according to embodiments of the disclosure may be applied to a wireless communication system illustrated in FIG. 1. As illustrated in FIG. 1, the wireless communication system includes a terminal and a network device. Information is sent and received between the terminal and the network device through wireless resources.

It is understandable that the wireless communication system illustrated in FIG. 1 is only for schematic illustration, and the wireless communication system may also include other network devices, such as a core network device, a wireless relay device, and a wireless backhaul device, which are not illustrated in FIG. 1. The number of network devices and the number of terminals included in the wireless communication system are not included in embodiments of the disclosure.

It is further understandable that the wireless communication system in embodiments of the disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense Multiple Access with Conflict Avoidance. Based on the capacity, speed, delay and other factors of different networks, the network may be classified as a two-generation (2G) network, a 3G network, a 4G network or a future evolution network, such as a 5G network. The 5G network may also be called a New Radio (NR). For convenience of description, the disclosure sometimes simply refers to a wireless communication network as a network.

Further, the network device involved in the disclosure may also be referred to as wireless access network device. The wireless access network device may be a base station, an evolved node B (base station), a home base station, an access point (AP) in a wireless fidelity (WIFI) system, a wireless relay node, a wireless backhaul node, a transmission point (TP), a transmission and reception point (TRP), or a gNB in an NR system. Or, the wireless access network device may be a component or a part that constitutes a base station. When the network system is a vehicle-to-everything (V2X) communication system, the network device may be a vehicle-mounted device. It is understandable that in embodiments of the disclosure, the specific technology and specific device form adopted by the network device are not limited.

Further, the terminal involved in the disclosure may also be referred to as terminal device, User Equipment (UE), Mobile Station (MS), Mobile Terminal (MT), or others, which is a device for providing voice and/or data connectivity to the user. For example, the terminal may be a handheld device or a vehicle-mounted device with a wireless connection function. At present, examples of the terminal include: Mobile Phone, Pocket Personal Computer (PPC), palmtop computer, Personal Digital Assistant (PDA), notebook computer, tablet computer, wearable device, or vehicle-mounted device. In addition, when the network system is a vehicle-to-everything (V2X) communication system, the terminal may be a vehicle-mounted device. It is understandable that embodiments of the disclosure do not limit the specific technology and specific device form adopted by the terminal.

The terminal involved in embodiments of the disclosure may be understood as a new type of terminal designed in 5G NR, i.e., Reduced capability UE or NR-lite for short. In embodiments of the disclosure, the new-type terminal is called 5G NR-lite.

Similar to Internet of Things (IoT) devices in Long Term Evolution (LTE), the 5G NR-lite usually needs to meet following requirements:

- Low cost and low complexity;
- a certain level of coverage enhancement; and
- power saving.

Since the current NR system is designed for high-end terminals such as high-speed and low-latency, the current design cannot meet the above requirements of NR-lite. Therefore, it is necessary to modify the current NR system to meet the requirements of NR-lite. For example, in order to meet the requirements of low cost and low complexity, the Radio Frequency (RF) bandwidth of NR-IoT may be limited, such as limited to 5M Hz or 10M Hz, or the buffer size of NR-lite may be limited to limit the size of the transmission block received each time. For power saving, the possible optimization direction is to simplify the communication process and reduce the number of times that the NR-lite terminal detects the downlink control channels.

In the related art, in the NR system, an initial uplink bandwidth part (Initial ULBWP) is defined, and PUCCH resource(s) on the Initial UL BWP is/are configured based on a broadcast message. The PUCCH resource(s) on the Initial UL BWP is/are at least used for a Hybrid Automatic Repeat reQuest (HARQ) feedback of message 4 (Msg.4) in a four-step random access or for the HARQ feedback of message B (Msg.B) in a two-step random access. When configuring the PUCCH resource(s) on the Initial UL BWP based on the broadcast message, the possible configuration resource set of the PUCCH may be predefined in a protocol, as shown in Table 1 below.

Table 1

| Index (resource set index) | PUCCH format | First symbol (first time domain symbol of PUCCH resource) | Number of symbols (number of symbols occupied by PUCCH resource) | PRB offset $RB_{\mathrm{BWP}}^{\mathrm{offset}}$ (PRB resource offset) | Set of initial CS indexes (cyclic shift sequence index) |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{\mathrm{BWP}}^{\mathrm{size}}/4 \right\rfloor$ | {0, 3, 6, 9} |

As shown in Table 1, the resource configuration set for configuring the PUCCH resource includes a PUCCH transmission format, resources of Orthogonal Frequency Division Multiplexing (OFDM) symbols occupied in the time domain and the resource parameter about the physical resource block (PRB) in the initial UL BWP, and the parameter about the cyclic shift sequence for PUCCH multiplexing in one PRB. Each resource configuration set corresponds to a respective resource set index, and the index may be notified through a System Information Block (SIB) message sent by a network device. The terminal determines the transmission configuration related to the PUCCH through the index and the above preset table 1.

In this case, the frequency hopping for the PUCCH transmission in the initial UL BWP is configured to be enabled by default. When the frequency hopping for the PUCCH transmission is enabled, the content of the PUCCH in a first half of a transmission slot is on the PRB resource at one end (such as the starting position) of the initial UL BWP and the content of the PUCCH in a second half of the transmission slot is on the PRB resource at the other end (such as the end position) of the initial UL BWP.

In the related art, the PRB index of the PRB bearing the PUCCH resource when the frequency hopping is enabled may be determined in following two ways.

Way 1, if $\left\lfloor r_{\mathrm{PUCCH}}/8 \right\rfloor = 0$, the first hop of the PUCCH is to transmit on the PRB resource at the starting position of the initial UL BWP, for example, the PRB index of the PRB where the first hop of PUCCH is located is $RB_{\mathrm{BWP}}^{\mathrm{offset}} + \left\lfloor r_{\mathrm{PUCCH}}/N_{\mathrm{CS}} \right\rfloor$, and the second hop is to transmit on the PRB resource at the end position of the initial UL BWP, for example the PRB index of the PRB where the second hop of the PUCCH is located is $N_{\mathrm{BWP}}^{\mathrm{size}} - 1 - RB_{\mathrm{BWP}}^{\mathrm{offset}} - \left\lfloor r_{\mathrm{PUCCH}}/N_{\mathrm{CS}} \right\rfloor$. The corresponding cyclic shift sequence is $r_{\mathrm{PUCCH}} \bmod N_{CS}$.

where, $RB_{BWP}^{offset}$ represents the PRB resource offset, $r_{PUCCH}$ represents the PUCCH resource index, $N_{CS}$ represents the number of cyclic shift sequences, and ⌊ ⌋ represents a rounding down operation. $r_{PUCCH}$ is the PUCCH resource index calculated by the terminal side based on the scheduling information, and $RB_{BWP}^{offset}$ $N_{CS}$ are determined based on the PUCCH configuration resource set index from Table 1 above.

Way 2: if $\lfloor r_{PUCCH}/8 \rfloor = 1$ , the first hop of PUCCH is to transmit on the PRB resource at the end position of initial UL BWP, for example the PRB index where the first hop of PUCCH is located is $N_{BWP}^{size} - 1 - RB_{BWP}^{offset} - \lfloor r_{PUCCH}/N_{CS} \rfloor$ , and the second hop of PUCCH is to transmit on the PRB resource at the starting position of the initial UL BWP, for example the PRB index where the second hop of the PUCCH is located is $RB_{BWP}^{offset} + \lfloor r_{PUCCH}/N_{CS} \rfloor$ . The corresponding cyclic shift sequence is $(r_{PUCCH}-8) \bmod N_{CS}$.

where, $N_{BWP}^{size}$ represents the resource amount on the Initial UL BWP, which may be for example the number of PRBs in the Initial UL BWP, represents the PRB resource offset, $RB_{BWP}^{offset}$ represents the PUCCH resource index, $r_{PUCCH}$ represents the number of cyclic shift sequences, and $N_{CS}$ represents the rounding down operation. $r_{PUCCH}$ is the PUCCH resource index calculated by the terminal side based on the scheduling information, and $RB_{BWP}^{offset}$ $N_{CS}$ are determined based on the PUCCH configuration resource set index from Table 1 above.

In the related art, considering factors such as the constraint on the terminal bandwidth, TDD center frequency-alignment and Synchronization Signal and PBCH block (SSB) overhead, it is necessary to configure a separate Initial UL BWP for a RedCap terminal.

The separate Initial UL BWP configured for the RedCap terminal may be configured in such a way that the frequency hopping for PUCCH transmission is enabled or disabled. For the separate Initial UL BWP configured for the RedCap terminal, how to allocate the PUCCH resource and determine the PRB index is a problem that needs to be solved.

For the convenience of description in embodiments of the disclosure, the Initial UL BWP having a function of enabling the frequency hopping and a function of disabling the frequency hopping is referred to as "first BWP". The Initial UL BWP in which the frequency hopping function is enabled by default is called "second BWP".

Embodiments of the disclosure provide a method for determining a PUCCH resource. In the method, PUCCH resource(s) is/are allocated to a first BWP and PRB index(s) of PRB(s) bearing the PUCCH resources is/are determined.

FIG. 2 is a flowchart illustrating a method for determining a PUCCH resource according to an embodiment. As illustrated in FIG. 2, the method for determining a PUCCH resource is applied to a terminal and includes the following.

In step S11, a PUCCH resource configured in a first BWP is obtained. A frequency hopping for PUCCH transmission in the first BWP is configured to be enabled or disabled.

In step S12, a PRB index of a PRB bearing the PUCCH resource is determined.

In embodiments of the disclosure, for the first BWP in which the frequency hopping for the PUCCH transmission may be enabled or disabled, the PRB index of the PRB bearing(carrying) the PUCCH resource may be determined, thereby realizing the PUCCH PRB allocation and the PRB index determination for the first BWP, and realizing the enhancement on configuring the PUCCH resource in the BWP.

In embodiments of the disclosure, the first BWP may be a separate Initial UL BWP configured for the RedCap terminal. The frequency hopping function in the first BWP may be enabled or disabled, which is different from the Initial UL BWP in which the frequency hopping function is enabled by default in traditional NR technology.

In an example, the first BWP involved in embodiments of the disclosure is at least used for random access.

The PUCCH resource configured in the first BWP is at least used for bearing the HARQ feedback of Msg.4 in the four-step random access or bearing the HARQ feedback of Msg.B in the two-step random access.

In embodiments of the disclosure, in response to configuring to enable the frequency hopping for the PUCCH transmission in the first BWP, the PRB index of the PRB bearing the PUCCH resource is the same as the PRB index of the PUCCH resource configured in the second BWP. In an example, it is assumed that the first BWP is a separate Initial UL BWP configured for the RedCap terminal and the second BWP is a general Initial UL BWP in the NR protocol. When the PUCCH frequency hopping in the separate Initial UL BWP configured for the RedCap terminal is enabled, the traditional PUCCH PRB configuration method (the resource configuration set in Table 1) and the PRB index method (the above way 1 or way 2) may be reused.

In another embodiment, it may also be configured to disable the frequency hopping for the PUCCH transmission in the first BWP. In embodiments of the disclosure, the process of PUCCH PRB allocation and PRB index confirmation for the first BWP within which the frequency hopping for the PUCCH transmission is disabled will be described below.

FIG. 3 is a flowchart illustrating a method for determining a PUCCH resource on a first BWP within which the frequency hopping for the PUCCH transmission is disabled according to an embodiment. As illustrated in FIG. 3, the method for determining a PUCCH resource is applied to a terminal and includes the following.

In step S21, first parameters are obtained, in which the first parameters include at least one of a PUCCH resource index, a resource amount on the first BWP, a number of cyclic shift sequences, or a PRB resource offset.

In step S22, the PRB index of the PRB bearing the PUCCH resource in the first BWP is determined based on the first parameters.

In the method for determining a PUCCH resource according to embodiments of the disclosure, in response to disabling the frequency hopping in the first BWP, the PRB index of the PRB bearing the PUCCH resource in the first BWP is determined based on at least one of the PUCCH resource index, the resource amount on the first BWP, the number of cyclic shift sequences, or the PRB resource offset.

The first parameters include a PUCCH resource index, and the PUCCH resource index may be determined based on information of a downlink control channel.

In an example, in embodiments of the disclosure, the PUCCH resource index may be determined based on information of a Control Channel Element (CCE) occupied by the downlink control channel, or the PUCCH resource index may be determined based on the PUCCH resource allocation information included in a Physical Downlink Control Channel (PDCCH). Or, the PUCCH resource index may be determined based on the CCE occupied by the downlink control channel and the PUCCH resource allocation information included in the PDCCH.

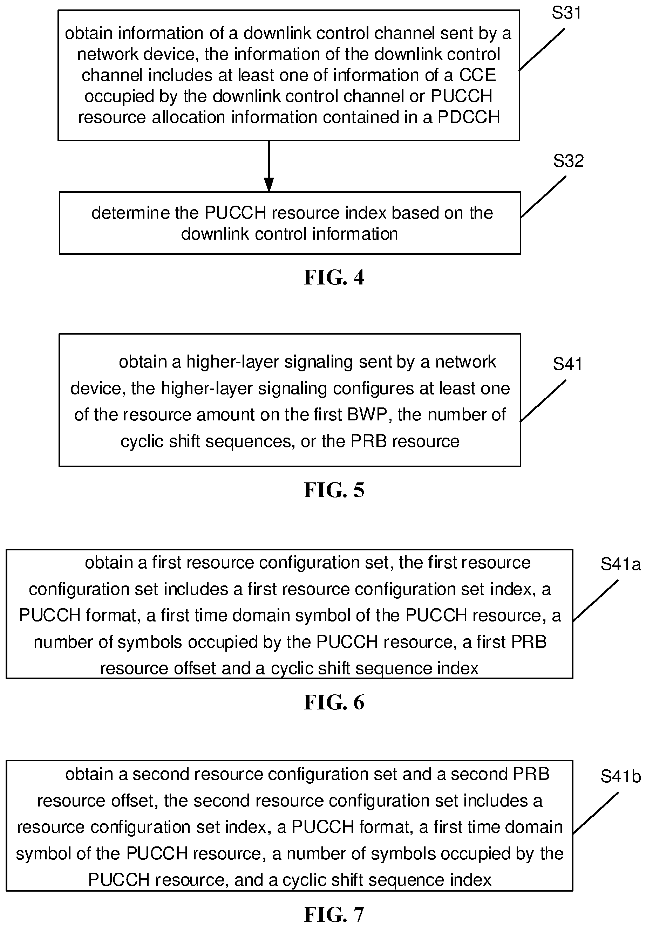

FIG. 4 is a flowchart illustrating a method for determining a PUCCH resource on a first BWP within which the frequency hopping for the PUCCH transmission is disabled according to an embodiment. As illustrated in FIG. 4, the method for determining a PUCCH resource is applied to a terminal and includes the following.

In step S31, the information of the downlink control channel sent by the network device is obtained, in which the information of the downlink control channel includes at least one of information of a CCE occupied by the downlink control channel or PUCCH resource allocation information included in a PDCCH.

In step S32, a PUCCH resource index is determined based on the information of the downlink control channel.

In another example, the first parameters include at least one of the resource amount on the first BWP, the number of cyclic shift sequences, or the PRB resource offset. At least one of the resource amount on the first BWP, the number of cyclic shift sequences, or the PRB resource offset may be configured through a higher-level signaling. The terminal determines, based on the higher-layer signaling sent by the network device, at least one of the resource amount on the first BWP, the number of cyclic shift sequences, or the PRB resource offset.

FIG. 5 is a flowchart illustrating a method for determining a PUCCH resource on a first BWP within which the frequency hopping for the PUCCH transmission is disabled according to an embodiment. The method may be performed alone or in combination with other embodiments. As illustrated in FIG. 5, the method for determining a PUCCH resource is applied to a terminal and includes the following.

In step S41, a higher-layer signaling sent by a network device is obtained, in which the higher-layer signaling configures at least one of the resource amount on the first BWP, the number of cyclic shift sequences, or the PRB resource offset.

In an implementation, the higher-layer signaling may reuse the Table 1 to configure a resource configuration set for the PUCCH resource in the first BWP, which is hereinafter referred to as the first resource configuration set. The first resource configuration set includes a resource configuration set index, a PUCCH format, a first time domain symbol of the PUCCH resource, a number of symbols occupied by the PUCCH resource, a first PRB resource offset and a cyclic shift sequence index.

FIG. 6 is a flowchart illustrating a method for determining a PUCCH resource on a first BWP within which the frequency hopping for the PUCCH transmission is disabled according to an embodiment. The method may be performed alone or in combination with other embodiments. As illustrated in FIG. 6, the method for determining a PUCCH resources is applied to a terminal and includes the following.

In step S41a, a first resource configuration set is obtained, in which the first resource configuration set includes a resource configuration set index, a PUCCH format, a first time domain symbol of the PUCCH resource, a number of symbols occupied by the PUCCH resource, a first PRB resource offset and a cyclic shift sequence index.

In embodiments of the disclosure, in response to disabling the frequency hopping for the first BWP, the first resource configuration set is configured through a higher-layer signaling. As shown in Table 1, the first PRB resource offset included in the first resource configuration set may be selected from {0, 2, 3, 4}.

In embodiments of the disclosure, the network device configures the first resource configuration set shown in Table 1 based on the higher-layer signaling. The terminal obtains the first resource configuration set and determines the first PRB resource offset and the cyclic shift sequence index. The terminal determines the PRB index of the PRB bearing the PUCCH in the first BWP based on at least one of the PUCCH resource index, the resource amount on the first BWP, the number of cyclic shift sequences, or the first PRB resource offset.

In another embodiment, the higher-layer signaling configures the resource configuration set index, the PUCCH format, the first time domain symbol of the PUCCH resource, the number of symbols occupied by the PUCCH resource and the cyclic shift sequence index in a manner of resource configuration set, and configures the PRB resource offset separately, so that there are more choices for the PRB offset, not limited to {0, 2, 3, 4} shown in Table 1.

When the resource configuration is delivered through the first resource configuration set, the network side device may notify the terminal whether to enable or disable the frequency hopping when sending the first resource configuration set or use other messages to notify the terminal whether to enable frequency hopping or disable the frequency hopping.

Hereinafter, the resource configuration set including the resource configuration set index, the PUCCH format, the first time domain symbol of the PUCCH resource, the number of symbols occupied by the PUCCH resource, and the cyclic shift sequence index is referred to as "second resource configuration set". The PRB resource offset separately configured by the higher-layer signaling is called "second PRB resource offset".

FIG. 7 is a flowchart illustrating a method for determining a PUCCH resource on a first BWP within which the frequency hopping for the PUCCH transmission is disabled according to an embodiment. The method may be performed alone or in combination with other embodiments. As illustrated in FIG. 7, the method for determining a PUCCH resource is applied to a terminal and includes the following.

In step S41b, a second resource configuration set and a second PRB resource offset are obtained. The second resource configuration set includes a resource configuration set index, a PUCCH format, a first time-domain symbol of the PUCCH resource, a number of symbols occupied by the PUCCH resource, and a cyclic shift sequence index.

In an example, the second resource configuration set may be configured in a manner shown in Table 2 below.

Table 2

| Index | PUCCH format | First symbol | Number of symbols | Set of initial CS indexes |
|---|---|---|---|---|
| 0 | 0 | 12 | 2 | {0, 3} |
| 1 | 0 | 12 | 2 | {0, 4, 8} |
| 2 | 0 | 12 | 2 | {0, 4, 8} |
| 3 | 1 | 10 | 4 | {0, 6} |
| 4 | 1 | 10 | 4 | {0, 3, 6, 9} |
| 5 | 1 | 10 | 4 | {0, 3, 6, 9} |
| 6 | 1 | 10 | 4 | {0, 3, 6, 9} |
| 7 | 1 | 4 | 10 | {0, 6} |
| 8 | 1 | 4 | 10 | {0, 3, 6, 9} |
| 9 | 1 | 4 | 10 | {0, 3, 6, 9} |
| 10 | 1 | 4 | 10 | {0, 3, 6, 9} |
| 11 | 1 | 0 | 14 | {0, 6} |
| 12 | 1 | 0 | 14 | {0, 3, 6, 9} |
| 13 | 1 | 0 | 14 | {0, 3, 6, 9} |
| 14 | 1 | 0 | 14 | {0, 3, 6, 9} |
| 15 | 1 | 0 | 14 | {0, 3, 6, 9} |

In embodiments of the disclosure, the network device configures the second resource configuration set shown in Table 2 based on the higher-layer signaling. The terminal obtains the second resource configuration set and determines the cyclic shift sequence index in the second resource configuration set. The terminal further obtains the second PRB resource offset based on higher-layer signaling. The PRB index of the PRB bearing the PUCCH on the first BWP is determined based on at least one of the PUCCH resource index, the resource amount on the first BWP, the number of cyclic shift sequences, or the second PRB resource offset.

In embodiments of the disclosure, the terminal configures the PUCCH resource based on the first parameters involved in foregoing embodiments. When the PUCCH resource is determined, the PRB index of the PRB bearing the PUCCH resource may be further determined based on the first parameters.

In an implementation, the first parameters include the PUCCH resource index, the number of cyclic shift sequences, and the PRB resource offset. The PRB index of the PRB bearing the PUCCH resource is determined based on the PUCCH resource index, the number of cyclic shift sequences, and the PRB resource offset.

In embodiments of the disclosure, the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor r_{PUCCH} / N_{CS} \right\rfloor ;$$

where, $\text{Index}_{PRB}$ represents the PRB index, $RB_{BWP}^{\text{offset}}$ represents the PRB resource offset, $r_{PUCCH}$ represents the PUCCH resource index, $N_{CS}$ represents the number of cyclic shift sequences, and $\lfloor \; \rfloor$ represents the rounding down operation.

In embodiments of the disclosure, the PRB index of the PRB bearing the PUCCH resource is determined based on a manner of $\text{Index}_{PRB} = RB_{BWP}^{\text{offset}} + \left\lfloor r_{PUCCH} / N_{CS} \right\rfloor$, so that the PRB index of the PRB bearing the PUCCH resource may be determined at the head (starting position) of the first BWP.

In another implementation, the first parameters include the PUCCH resource index, the resource amount on the first BWP, the number of cyclic shift sequences, and the PRB resource offset. The PRB index of the PRB bearing the PUCCH resource is determined based on the PUCCH resource index, the resource amount on the first BWP, the number of cyclic shift sequences, and the PRB resource offset.

In an implementation, the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor r_{PUCCH} / N_{CS} \right\rfloor ;$$

where, $\text{Index}_{PRB}$ represents the PRB index, $N_{BWP}^{\text{size}}$ represents the resource amount on the first BWP, $RB_{BWP}^{\text{offset}}$ represents the PRB resource offset, $r_{PUCCH}$ represents the PUCCH resource index, $N_{CS}$ represents the number of cyclic shift sequences, and $\lfloor \; \rfloor$ represents the rounding down operation.

In embodiments of the disclosure, the PRB index of the PRB bearing the PUCCH resource is determined based on the a manner of $\text{Index}_{PRB} = N_{BWP}^{\text{size}} - 1 - RB_{BWP}^{\text{offset}} - \left\lfloor r_{PUCCH} / N_{CS} \right\rfloor$, so that the PRB index of the PRB bearing the PUCCH resource may be determined at the tail (the end position) of the first BWP.

In yet another implementation of embodiments of the disclosure, the PRB index of the PRB bearing the PUCCH resource may be indicated by an indicator

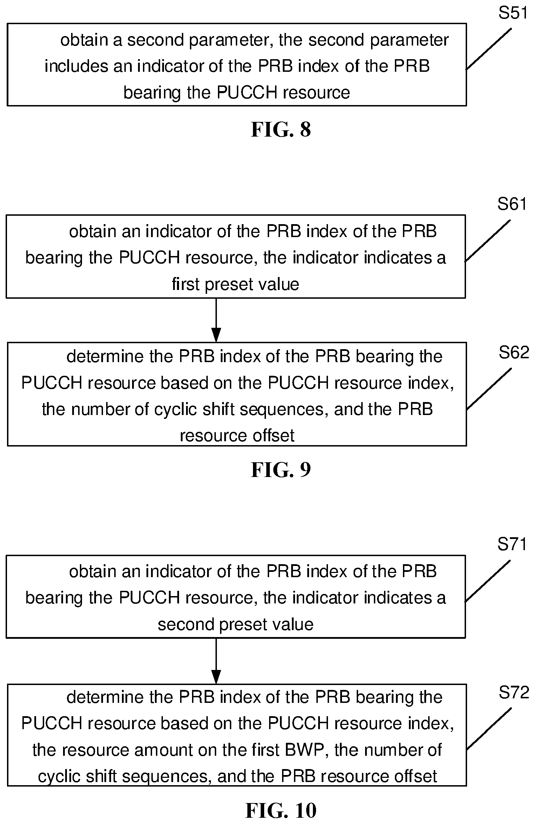

FIG. 8 is a flowchart illustrating a method for determining a PUCCH resource on a first BWP within which the frequency hopping for the PUCCH transmission is disabled according to an embodiment. The method may be performed alone or in combination with other embodiments. As illustrated in FIG. 8, the method for determining a PUCCH resource is applied to a terminal and includes the following.

In step S51, a second parameter is obtained, in which the second parameter includes an indicator of a PRB index of the PRB bearing the PUCCH resource.

In embodiments of the disclosure, the indicator of the PRB index of the PRB bearing the PUCCH resource may be bits, and different bit values after the bits are set are used to indicate different PRB indexes.

In an example, embodiments of the disclosure may indicate different PRB indexes by setting different indicator values.

In embodiments of the disclosure, the PRB index of the PRB bearing the PUCCH resource may be at the head (i.e., starting position) of the first BWP, or may be at the tail (i.e., the end position) of the first BWP.

In an implementation, in embodiments of the disclosure, the indicator of the PRB index of the PRB bearing the PUCCH resource indicates a first preset value, and the PRB index of the PRB bearing the PUCCH resource may be at the head (i.e., starting position) of the first BWP The indicator of the PRB index of the PRB bearing the PUCCH resource indicates a second preset value, and the PRB index of the PRB bearing the PUCCH resource may be at the tail (i.e., the end position) of the first BWP

In embodiments of the disclosure, the manner of determining the PRB index in the second BWP may be reused.

In an implementation, the first BWP is located within a bandwidth range of the second BWP, and a difference between the starting position of the first BWP and the starting position of the second BWP is smaller than a preset threshold, that is, the head of the first BWP is close to the head of the second BWP, and the indicator of the PRB index of the PRB bearing the PUCCH resource indicates the first preset value. The PRB index of the PRB bearing the PUCCH resource is determined based on the PUCCH resource index, the number of cyclic shift sequences, and the PRB resource offset.

FIG. 9 is a flowchart illustrating a method for determining a PUCCH resource on a first BWP within which the frequency hopping for the PUCCH transmission is disabled according to an embodiment. The method may be performed alone or in combination with other embodiments. As illustrated in FIG. 9, the method for determining a PUCCH resource is applied to a terminal, and includes the following.

In step S61, an indicator of the PRB index of the PRB bearing the PUCCH resource is obtained, and the indicator indicates a first preset value.

In step S62, the PRB index of the PRB bearing the PUCCH resource is determined based on the PUCCH resource index, the number of cyclic shift sequences, and the PRB resource offset.

In embodiments of the disclosure, in response to the indicator of the PRB index of the PRB bearing the PUCCH resource indicating the first preset value, the PRB index of the PRB bearing the PUCCH resource may be determined based on: $\text{Index}_{PRB} = N_{BWP}^{\text{size}} - 1 - RB_{BWP}^{\text{offset}} - \lfloor r_{PUCCH} / N_{CS} \rfloor$, to realize reusing the method of determining the PRB index for second BWP The PRB index of the PRB bearing the PUCCH resource is determined at the head (i.e., starting position) of the first BWP.

In another implementation, the first BWP is located within a bandwidth range of the second BWP, a difference between an end position of the first BWP and an end position of the second BWP is less than a preset threshold, and an indicator of the PRB index of the PRB bearing the PUCCH resource indicates the second preset value. That is, the tail of the first BWP is close to the tail of the second BWP, and the indicator of the PRB index of the PRB bearing the PUCCH resource indicates the second preset value. The PRB index of the PRB bearing the PUCCH resource is determined based on the PUCCH resource index, the resource amount on the first BWP, the number of cyclic shift sequences, and the PRB resource offset.

FIG. 10 is a flowchart illustrating a method for determining a PUCCH resource on a first BWP within which the frequency hopping for the PUCCH transmission is disabled according to an embodiment. The method may be performed alone or in combination with other embodiments. As illustrated in FIG. 10, the method for determining a PUCCH resource is applied to a terminal, and includes the following

In step S71, the indicator of the PRB index of the PRB bearing the PUCCH resource is obtained, and the indicator indicates a second preset value.

In step S72, the PRB index of the PRB bearing the PUCCH resource is determined based on the PUCCH resource index, the resource amount on the first BWP, the number of cyclic shift sequences, and the PRB resource offset.

In embodiments of the disclosure, in response to the indicator of the PRB index of the PRB bearing the PUCCH resource indicating the second preset value, the PRB index of the PRB bearing the PUCCH resource may be determined based on: $\text{Index}_{PRB} = N_{BWP}^{\text{size}} - 1 - RB_{BWP}^{\text{offset}} - \lfloor r_{PUCCH} / N_{CS} \rfloor$, to realize reusing the method of determining the PRB index for second BWP. The PRB index of the PRB bearing the PUCCH resource is determined at the tail (i.e., end position) of the first BWP.

In embodiments of the disclosure, in foregoing embodiments, the cyclic shift sequence index may be determined based on the PUCCH resource index and the number of cyclic shift sequences.

In an implementation, the cyclic shift sequence index, the PUCCH resource index, and the number of cyclic shift sequences satisfy the following relationship:

$$\text{Index}_{CS} = r_{PUCCH} \bmod N_{CS};$$

where, $\text{Index}_{CS}$ represents the cyclic shift sequence index, $r_{PUCCH}$ represents the PUCCH resource index, and $N_{CS}$ represents the number of cyclic shift sequences.

In embodiments of the disclosure, when the frequency hopping for the PUCCH transmission is disabled in the first BWP, the PRB index of the PRB bearing the PUCCH of the first BWP is determined based on at least one of the PUCCH resource index, the resource amount on the first BWP, the number of cyclic shift sequences, or the PRB resource offset, thereby enhancing the communication transmission of the BWP within which the frequency hopping for the PUCCH transmission is disabled.

With the same idea, embodiments of the disclosure also provide a method for determining a PUCCH resource performed by a network device.

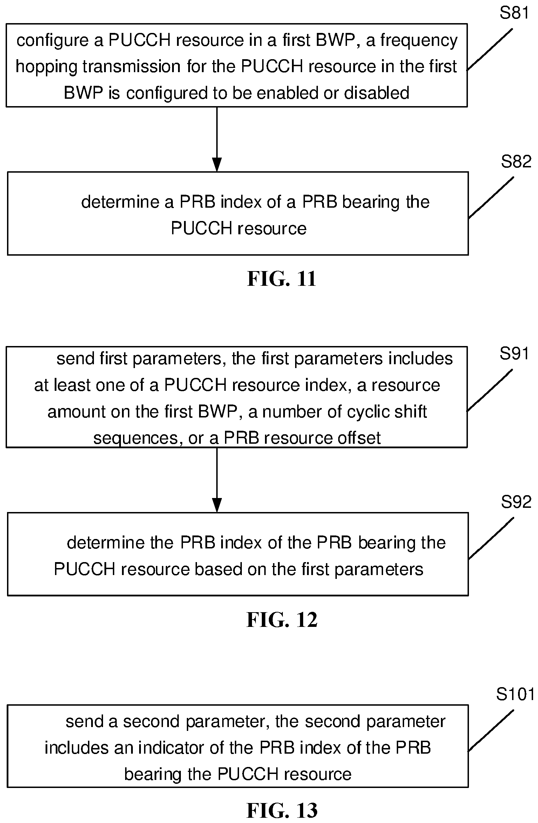

FIG. 11 is a flowchart illustrating a method for determining a PUCCH resource according to an embodiment. The method may be performed alone or in combination with other embodiments. As illustrated in FIG. 11, the method for determining a PUCCH resource is applied to a network device and includes the following.

In step S81, a PUCCH resource in a first BWP is configured, in which a frequency hopping for the PUCCH transmission in the first BWP is configured to be enabled or disabled.

In step S82, a Physical Resource Block (PRB) index of a PRB bearing the PUCCH resource is determined.

In embodiments of the disclosure, the first BWP may be a separate Initial UL BWP configured for the RedCap terminal. The frequency hopping function of the first BWP may be enabled or disabled, which is different from the Initial UL BWP in which the frequency hopping function is enabled by default in the traditional NR technology.

In embodiments of the disclosure, for the first BWP may be configured in such a way that the frequency hopping for the PUCCH transmission in the configured first BWP is enabled or the frequency hopping for the PUCCH transmission in the configured first BWP is disabled, the PRB index of the PRB bearing PUCCH resource may be determined, thereby realizing the PUCCH PRB allocation and the PRB index confirmation for the first BWP and realizing the configuration enhancement for the PUCCH resources in the BWP.

FIG. 12 is a flowchart illustrating a method for determining a PUCCH resource on a first BWP within which the frequency hopping for the PUCCH transmission is disabled according to an embodiment. The method may be performed alone or in combination with other embodiments. As illustrated in FIG. 12, the method for determining a PUCCH resource is applied to a network device and includes the following.

In step S91, first parameters are sent, in which the first parameters include at least one of the PUCCH resource index, the resource amount on the first BWP, the number of cyclic shift sequences, or the PRB resource offset.

In step S92, the PRB index of the PRB bearing the PUCCH resource is determined based on the first parameters.

In an implementation, the first parameters include the PUCCH resource index. The PUCCH resource index may be included in the information of the downlink control channel sent by the network device. For example, the network device sends the information of the downlink control channel, in which the information of the downlink control channel includes at least one of information of a CCE occupied by the downlink control channel or PUCCH resource allocation information included in the PDCCH. At least one of the information of the CCE occupied by the downlink control channel or the PUCCH resource allocation information included in the PDCCH includes parameter information for determining the PUCCH resource index.

In an implementation, the first parameters include at least one of the resource amount on the first BWP, the number of cyclic shift sequences, or the PRB resource offset. At least one of the resource amount on the first BWP, the number of cyclic shift sequences, or the PRB resource offset may be configured in the higher-layer signaling sent by the network device to the terminal. For example, the network device sends the higher-layer signaling, in which the higher-layer signaling configures at least one of the resource amount on the first BWP, the number of cyclic shift sequences, or the PRB resource offset.

In an implementation, the higher-layer signaling configures the first resource configuration set, in which the first resource configuration set includes the resource configuration set index, the PUCCH format, the first time domain symbol of the PUCCH resource, the number of symbols occupied by the PUCCH resource, the first PRB resource offset and the cyclic shift sequence index.

In an implementation, the higher-layer signaling configures the second resource configuration set and the second PRB resource offset, in which the second resource configuration set includes the resource configuration set index, the PUCCH format, the first time domain symbol of the PUCCH resource, the number of symbols occupied by the PUCCH resource and the cyclic shift sequence index.

In an implementation, the first parameters include the PUCCH resource index, the number of cyclic shift sequences, and the PRB resource offset.

In an example, the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor r_{PUCCH} / N_{CS} \right\rfloor,$$

where, $\text{Index}_{PRB}$ represents the PRB index, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents the rounding down operation.

In an implementation, the first parameters include the PUCCH resource index, the resource amount on the first BWP, the number of cyclic shift sequences, and the PRB resource offset.

In an example, the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor r_{PUCCH} / N_{CS} \right\rfloor_{;}$$

where, $\text{Index}_{PRB}$ represents the PRB index, $N_{BWP}^{\text{size}}$ represents the resource amount on the first BWP, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents a rounding down operation.

In yet another implementation of embodiments of the disclosure, the PRB index of the PRB bearing the PUCCH resource may be indicated by an indicator.

FIG. 13 is a flowchart illustrating a method for determining a PUCCH resource on a first BWP within which the frequency hopping for the PUCCH transmission is disabled according to an embodiment. The method may be performed alone or in combination with other embodiments. As illustrated in FIG. 13, the method for determining a PUCCH resource is applied to a network device and includes the following.

In step S101, a second parameter is sent, in which the second parameter includes an indicator of a PRB index of a PRB bearing a PUCCH resource.

In embodiments of the disclosure, the indicator of the PRB index of the PRB bearing the PUCCH resource may be bits, and different bit values after the bits are set indicate different PRB indexes.

In an example, embodiments of the disclosure may indicate different PRB indexes by setting different indicator values.

In an implementation, the first BWP is located within a bandwidth range of the second BWP, a difference between a starting position of the first BWP and a starting position of the second BWP is less than a preset threshold, and the indicator of the PRB index of the PRB bearing the PUCCH resource indicates the first preset value. That is, the head of the first BWP is close to the head of the second BWP, and the indicator of the PRB index of the PUCCH resource indicates the first preset value. The PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor r_{PUCCH} / N_{CS} \right\rfloor_{;}$$

where, $\text{Index}_{PRB}$ represents the PRB index, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents the rounding down operation.

In an implementation, the first BWP is located within a bandwidth range of the second BWP, a difference between an end position of the first BWP and an end position of the second BWP is less than a preset threshold, and the indicator of the PRB index of PRB bearing the PUCCH resource indicates the second preset value. That is, the tail of the first BWP is close to the tail of the second BWP, and the indicator of the PRB index of the PRB bearing the PUCCH resource indicates the second preset value. The PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor r_{PUCCH} / N_{CS} \right\rfloor_{;}$$

where, $\text{Index}_{PRB}$ represents the PRB index, $N_{BWP}^{\text{size}}$ represents the resource amount on the first BWP, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents the rounding down operation.

In an implementation, the network device may determine the cyclic shift sequence index based on the PUCCH resource index and the number of cyclic shift sequences.

In an implementation, the cyclic shift sequence index, the PUCCH resource index, and the number of cyclic shift sequences satisfy the following relationship: $\text{Index}_{CS} = r_{PUCCH} \bmod N_{CS;}$

where, $\text{Index}_{CS}$ represents the cyclic shift sequence index, $r_{PUCCH}$ represents the PUCCH resource index, and $N_{CS}$ represents the number of cyclic shift sequences.

In an example, the first BWP involved in embodiments of the disclosure is at least used for random access.

The PUCCH resource configured in the first BWP are at least used for bearing the HARQ feedback of Msg.4 in the four-step random access or bearing the HARQ feedback of Msg.B in the two-step random access.

In embodiments of the disclosure, in response to configuring the frequency hopping for the PUCCH transmission in the first BWP to be enabled, the PRB index of the PRB bearing the PUCCH resource is the same as the PRB index of the PUCCH resource configured in the second BWP. In an example, it is assumed that the first BWP is a separate Initial UL BWP configured for the RedCap terminal, and the second BWP is a general Initial UL BWP in the NR protocol. When the PUCCH frequency hopping in the separate Initial UL BWP configured for the RedCap terminal is enabled, the traditional PUCCH PRB configuration method (the resource configuration set in Table 1) and the PRB index method (the above way 1 or way 2) may be reused.

In embodiments of the disclosure, the network device configures the PUCCH resource for the first BWP, and determines the PRB index of the PRB carrying the PUCCH resource, to realize the enhancement of configuring the PUCCH resource for the BWP within which the frequency hopping for the PUCCH transmission may be enabled or disabled.

It is understandable that the method for determining a PUCCH resource performed by the network device in embodiments of the disclosure is similar to the method for determining a PUCCH resource performed by the terminal. Details of the method for determining a PUCCH resource performed by the network device may refer to the descriptions of above-mentioned embodiments, which will not be repeated here.

It is further understandable that, the method for determining a PUCCH resource according to embodiments of the disclosure is applicable to a process of determining the PUCCH resource through an interaction between the network device and the terminal. During the process of determining the PUCCH resource through the interaction between the network device and the terminal, the terminal and the network device have related functions involved in foregoing embodiments. For details, reference may be made to the relevant descriptions of foregoing embodiments, which will not be described in detail here.

It is noteworthy that those skilled in the art may understand that various implementation modes or various embodiments mentioned above in embodiments of the disclosure may be used in conjunction with foregoing embodiments, or may be used independently. Whether used alone or in combination with foregoing embodiments, the implementation principles are similar. In the disclosure, some embodiments are described in a manner of being used together. Certainly, those skilled in the art may understand that such manner is not a limitation to embodiments of the disclosure.

Based on the same idea, embodiments of the disclosure also provide an apparatus for determining a PUCCH resource.

It is understandable that, in order to realize above functions, the apparatus for determining a PUCCH resource according to embodiments of the disclosure includes corresponding hardware structures and/or software modules for performing various functions. Combining the units and algorithm steps of each example disclosed in embodiments of the disclosure, embodiments of the disclosure may be implemented in the form of hardware or a combination of hardware and computer software. Whether a certain function is executed by hardware or hardware driven by the computer software depends on the specific application and design constraints of the technical solution. Those skilled in the art may use different methods to implement the described functions for each specific application, but such implementation should not be regarded as exceeding the scope of the technical solutions of embodiments of the disclosure.

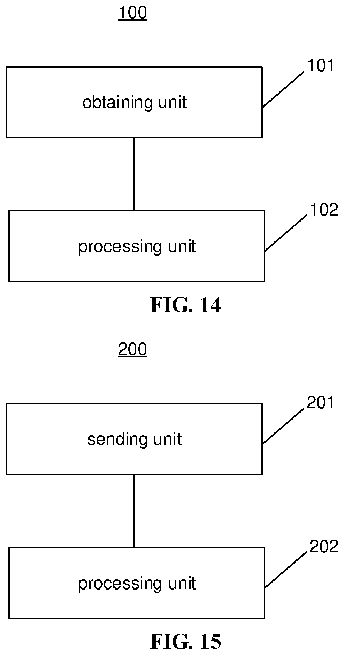

FIG. 14 is a block diagram illustrating an apparatus for determining a PUCCH resource according to an embodiment. As illustrated in FIG. 14, the apparatus 100 for determining a PUCCH resources may be provided as a terminal involved in above embodiments, including an obtaining unit 101 and a processing unit 102.

The obtaining unit 101 is configured to obtain the PUCCH resource configured in the first BWP, in which a frequency hopping for the PUCCH transmission in the first BWP is enabled or disabled.

The processing unit 102 is configured to determine a PRB index of a PRB bearing the PUCCH resource.

In an implementation, the first BWP is configured in such a way that the frequency hopping for the PUCCH transmission in the configured first BWP is disabled, and the obtaining unit 101 is configured to obtain first parameters, the first parameters include at least one of a PUCCH resource index, a resource amount on the first BWP, a number of cyclic shift sequences or a PRB resource offset. The processing unit 102 is configured to determine a PRB index of the PRB bearing a PUCCH resource based on the first parameters.

In an implementation, the first parameters include the PUCCH resource index. The obtaining unit 101 is configured to obtain information of a downlink control channel sent by the network device and determine the PUCCH resource index based on the information of the downlink control channel. The information of the downlink control channel includes at least one of information of a CCE occupied by the downlink control channel or PUCCH resource allocation information included in a PDCCH.

In an implementation, the first parameters include at least one of the resource amount on the first BWP, the number of cyclic shift sequences, or the PRB resource offset. The obtaining unit 101 is configured to obtain a higher-layer signaling sent by the network device. The higher-layer signaling configures at least one of the resource amount on the first BWP, the number of cyclic shift sequences, or the PRB resource offset.

In an implementation, the higher-layer signaling configures a first resource configuration set. The first resource configuration set includes a resource configuration set index, a PUCCH format, a first time domain symbol of the PUCCH resource, a number of symbols occupied by the PUCCH resource, a first PRB resource offset and a cyclic shift sequence index.

In an implementation, the higher-layer signaling configures a second resource configuration set and a second PRB resource offset. The second resource configuration set includes a resource configuration set index, a PUCCH format, a first time domain symbol of the PUCCH resource, a number of symbols occupied by the PUCCH resource and a cyclic shift sequence index.

In an implementation, the first parameters include the PUCCH resource index, the number of cyclic shift sequences, and the PRB resource offset.

In an implementation, the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor r_{PUCCH} / N_{CS} \right\rfloor,$$

where, $\text{Index}_{PRB}$ represents the PRB index, $RB_{BWP}^{\text{offset}}$ represents the PRB resource offset, $r_{PUCCH}$ represents the PUCCH resource index, $N_{CS}$ represents the number of cyclic shift sequences, and $\lfloor \rfloor$ represents the rounding down operation.

In an implementation, the first parameters include the PUCCH resource index, the resource amount on the first BWP, the number of cyclic shift sequences, and the PRB resource offset.

In an implementation, the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor r_{PUCCH} / N_{CS} \right\rfloor,$$

where, $\text{Index}_{PRB}$ represents the PRB index, $N_{BWP}^{\text{size}}$ represents the resource amount on the first BWP, $RB_{BWP}^{\text{offset}}$ represents the PRB resource offset, $r_{PUCCH}$ represents the PUCCH resource index, $N_{CS}$ represents the number of cyclic shift sequences, and $\lfloor \rfloor$ represents the rounding down operation.

In an implementation, the obtaining unit 101 is further configured to obtain a second parameter, in which the second parameter includes an indicator of the PRB index of the PRB bearing the PUCCH resource.

In an implementation, the first BWP is located within a bandwidth range of the second BWP, a difference between a starting position of the first BWP and a starting position of the second BWP is less than a preset threshold, and the indicator of the PRB index of the PRB bearing the PUCCH resource indicates a first preset value.

In an implementation, the first BWP is located within a bandwidth range of the second BWP, a difference between an end position of the first BWP and an end position of the second BWP is less than a preset threshold, and the indicator of the PRB index of the PRB bearing the PUCCH resource indicates a second preset value.

In an implementation, the processing unit 102 is further configured to determine the cyclic shift sequence index based on the PUCCH resource index and the number of cyclic shift sequences.

In an implementation, the cyclic shift sequence index, the PUCCH resource index, and the number of cyclic shift sequences satisfy the following relationship:

$$\text{Index}_{CS} = r_{PUCCH} \bmod N_{CS},$$

where, $\text{Index}_{CS}$ represents the cyclic shift sequence index, $r_{PUCCH}$ represents the PUCCH resource index, and $N_{CS}$ represents the number of cyclic shift sequences.

In an implementation, the first BWP is at least used for random access, and the PUCCH resource is at least used for bearing a HARQ feedback of message 4 in a four-step random access and/or bearing a HARQ feedback of message B in a two-step random access.

In an implementation, the frequency hopping for the PUCCH transmission in the first BWP is configured to be enabled, and the PRB index of the PRB bearing the PUCCH resources is same as a PRB index of the PUCCH resource configured in the second BWP. The second BWP is different from the first BWP and the frequency hopping for the PUCCH transmission in the second BWP is configured to be enabled by default.

FIG. 15 is a block diagram illustrating an apparatus for determining a PUCCH resource according to an embodiment. As illustrated in FIG. 15, the apparatus 200 for determining a PUCCH resource may be provided as the network device involved in above embodiments, including a sending unit 201 and a processing unit 202.

The sending unit 201 is configured to configure the PUCCH resource in a first BWP, in which the first BWP is configured in such a way that a frequency hopping for the PUCCH transmission in the configured first BWP is enabled or disabled. The processing unit 202 is configured to determine a PRB index of a PRB bearing the PUCCH resource.

In an implementation, the frequency hopping for the PUCCH transmission in the first BWP is configured to be disabled, and the sending unit 201 is configured to send first parameters. The first parameters include at least one of the PUCCH resource index, the resource amount on the first BWP, the number of cyclic shift sequences or the PRB resource offset. The processing unit 102 is configured to determine the PRB index of the PRB bearing the PUCCH resource based on the first parameters.

In an implementation, the first parameters include the PUCCH resource index. The sending unit 201 is configured to send information of a downlink control channel and determines the PUCCH resource index based on the information of the downlink control channel. The information of the downlink control channel includes at least one of information of a CCE occupied by the downlink control channel or PUCCH resource allocation information included in a PDCCH.

In an implementation, the first parameters include at least one of the resource amount on the first BWP, the number of cyclic shift sequences, or the PRB resource offset. The sending unit 201 is configured to send a higher-layer signaling, in which the higher-layer signaling configures at least one of the resource amount on the first BWP, the number of cyclic shift sequences, or the PRB resource offset.

In an implementation, the higher-layer signaling configures a first resource configuration set. The first resource configuration set includes a resource configuration set index, a PUCCH format, a first time domain symbol of the PUCCH resource, a number of symbols occupied by the PUCCH resource, a first PRB resource offset and a cyclic shift sequence index.

In an implementation, the higher-layer signaling configures a second resource configuration set and a second PRB resource offset. The second resource configuration set includes a resource configuration set index, a PUCCH format, a first time domain symbol of the PUCCH resource, a number of symbols occupied by the PUCCH resource and a cyclic shift sequence index.

In an implementation, the first parameters include the PUCCH resource index, the number of cyclic shift sequences, and the PRB resource offset.

In an implementation, the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor r_{PUCCH} / N_{CS} \right\rfloor,$$

where, $\text{Index}_{PRB}$ represents the PRB index, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents the rounding down operation.

In an implementation, the first parameters include the PUCCH resource index, the resource amount on the first BWP, the number of cyclic shift sequences, and the PRB resource offset.

In an implementation, the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor r_{PUCCH} / N_{CS} \right\rfloor,$$

where, $\text{Index}_{PRB}$ represents the PRB index, $N_{BWP}^{\text{size}}$ represents the resource amount on the first BWP, represents the PRB resource offset, $r_{PUCCH}$ represents the PUCCH resource index, $N_{CS}$ represents the number of cyclic shift sequences, and $\lfloor \ \rfloor$ represents the rounding down operation.

In an implementation, the sending unit 201 is configured to send a second parameter, in which the second parameter includes an indicator of the PRB index of the PRB bearing the PUCCH resource.

In an implementation, the first BWP is located within a bandwidth range of the second BWP, a difference between a starting position of the first BWP and a starting position of the second BWP is less than a preset threshold, and the indicator of the PRB index of the PRB bearing the PUCCH resource indicates a first preset value.

In an implementation, the first BWP is located within a bandwidth range of the second BWP, a difference between an end position of the first BWP and an end position of the second BWP is less than a preset threshold, and the indicator of the PRB index of the PRB bearing the PUCCH resource indicates a second preset value.

In an implementation, the processing unit 102 is further configured to determine the cyclic shift sequence index based on the PUCCH resource index and the number of cyclic shift sequences.

In an implementation, the cyclic shift sequence index, the PUCCH resource index, and the number of cyclic shift sequences satisfy the following relationship:

$$\text{Index}_{CS} = r_{PUCCH} \bmod N_{CS},$$

where, $\text{Index}_{CS}$ represents a cyclic shift sequence index, $r_{PUCCH}$ represents a PUCCH resource index, and $N_{CS}$ represents the number of cyclic shift sequences.

In an implementation, the first BWP is at least used for random access, and the PUCCH resource is at least used for bearing a HARQ feedback of message 4 in a four-step random access and/or bearing the HARQ feedback of message B in a two-step random access.

In an implementation, the frequency hopping for the PUCCH transmission in the first BWP is configured to be enabled, and the PRB index of the PRB bearing the PUCCH resources is the same as the PRB index of the PUCCH resources configured in the second BWP; the second BWP is different from the first BWP, and the frequency hopping for PUCCH transmission in the second BWP is configured to be enabled by default.

Regarding the apparatuses in foregoing embodiments, the specific manner in which each module executes operations has been described in detail in embodiments related to the method and will not be described in detail here.

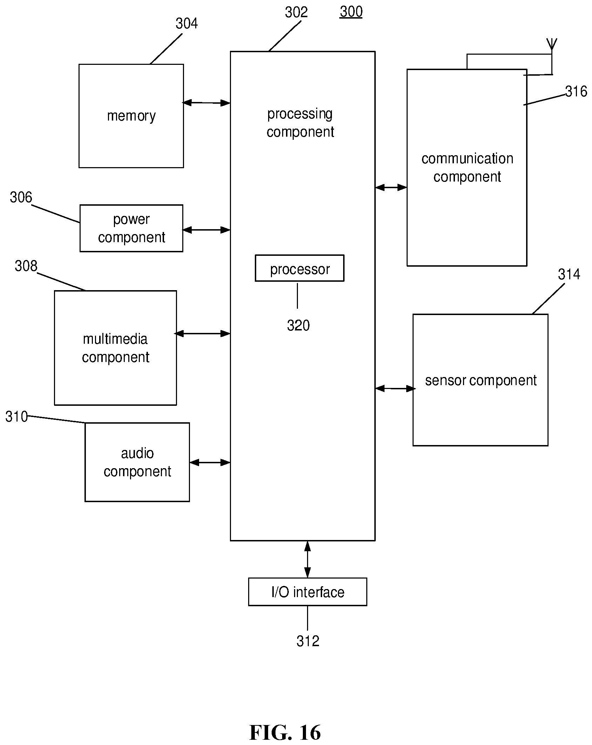

FIG. 16 is a block diagram illustrating a device 300 for determining a PUCCH resource according to an embodiment. For example, the device 300 may be provided as a terminal. For example, the device 300 may be a mobile phone, a computer, a digital broadcast terminal, a messaging device, a game console, a tablet device, a medical device, a fitness device, a personal digital assistant, or the like.

As illustrated in FIG. 16, the device 300 may include one or more of a processing component 302, a memory 304, a power component 306, a multimedia component 308, an audio component 310, an input/output (I/O) interface 312, a sensor component 314, or a communication component 316.

The processing component 302 generally controls the overall operations of the device 300, such as those associated with display, telephone calls, data communications, camera operations, and recording operations. The processing component 302 may include one or more processors 320 to execute instructions to complete all or part of steps of the above methods. Or, the processing component 302 may include one or more modules that facilitate interaction between the processing component 302 and other components. For example, the processing component 302 may include a multimedia module to facilitate interaction between the multimedia component 308 and the processing component 302.

The memory 304 is configured to store various types of data to support operations at the device 300. Examples of such data include instructions for any application or methods operating on the device 300, contact data, phonebook data, messages, pictures, videos, or the like. The memory 304 may be implemented by any type of volatile or non-volatile storage device or their combination, such as static random access memory (SRAM), electrically erasable programmable read-only memory (EEPROM), erasable Programmable Read Only Memory (EPROM), Programmable Read Only Memory (PROM), Read Only Memory (ROM), Magnetic Memory, Flash Memory, Magnetic or Optical Disk.

The power component 306 provides power to various components of device 300. The power component 306 may include a power management system, one or more power supplies, and other components associated with generating, managing, and distributing power for the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or swipe action, but also detect duration and pressure associated with the touch or swipe action. In some embodiments, the multimedia component 308 includes a front-facing camera and/or a rear-facing camera. When the device 300 is in an operation mode, such as a shooting mode or a video mode, the front-facing camera and/or the rear-facing camera may receive external multimedia data. Each front-facing camera and rear-facing camera may be a fixed optical lens system or have focal length and optical zoom capability.

The audio component 310 is configured to output and/or input audio signals. For example, the audio component 310 includes a microphone (MIC), which is configured to receive external audio signals when the device 300 is in operation modes, such as call mode, recording mode and voice recognition mode. Received audio signals may be further stored in memory 304 or sent via the communication component 316. In some embodiments, the audio component 310 also includes a speaker for outputting audio signals.

The I/O interface 312 provides an interface between the processing component 302 and a peripheral interface module, which may be a keyboard, a click wheel, a button, or the like. These buttons may include, but are not limited to: a home button, volume buttons, start button, and lock button.

The sensor component 314 includes one or more sensors for providing various aspects of status assessment for the device 300. For example, the sensor component 314 may detect the open/closed state of the device 300 and the relative positioning of components, such as the display and keypad of the device 300. The sensor component 314 may also detect a change in the position of the device 300 or a component of the device 300, the presence or absence of user contact with the device 300, the orientation or acceleration/deceleration of the device 300 and the temperature change of the device 300. The sensor component 314 may include a proximity sensor configured to detect the presence of nearby objects in the absence of any physical contact. The sensor component 314 may also include an optical sensor, such as a CMOS or CCD image sensor, for use in imaging applications. In some embodiments, the sensor component 314 may also include an acceleration sensor, a gyroscope sensor, a magnetic sensor, a pressure sensor or a temperature sensor.

The communication component 316 is configured to facilitate wired or wireless communication between the device 300 and other devices. The device 300 may access a wireless network based on communication standards, such as WiFi, 2G or 3G, or a combination thereof. In an embodiment, the communication component 316 receives broadcast signals or broadcast related information from an external broadcast management system via a broadcast channel. In an embodiment, the communication component 316 also includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology and other technologies.

In an embodiment, the device 300 may be programmed by one or more application specific integrated circuits (ASICs), digital signal processors (DSPs), digital signal processing devices (DSPDs), programmable logic devices (PLDs), field programmable A gate array (FPGA), controller, microcontroller, microprocessor or other electronic component implementation for performing the methods described above.

In an embodiment, there is also provided a non-transitory computer-readable storage medium having instructions stored thereon, such as the memory 304 including instructions, which may be executed by the processor 320 of the device 300 to implement the above methods. For example, the non-transitory computer readable storage medium may be ROM, random access memory (RAM), CD-ROM, magnetic tape, floppy disk, optical data storage device, and the like.

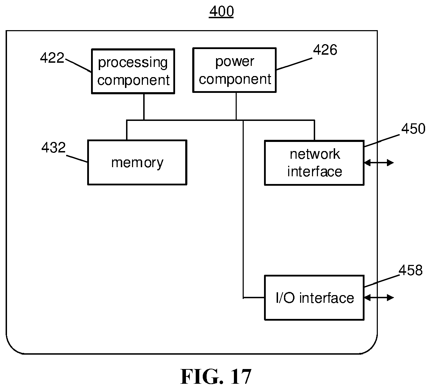

FIG. 17 is a block diagram illustrating a device 400 for determining a PUCCH resource according to an embodiment. For example, the device 400 may be provided as a network device. As illustrated in FIG. 17, the device 400 includes a processing component 422 which further includes one or more processors, and a memory resource represented by the memory 432 for storing instructions executable by the processing component 422, such as application programs. The application program stored in the memory 432 may include one or more modules each corresponding to a set of instructions. In addition, the processing component 422 is configured to execute instructions to perform the above methods.

The device 400 may also include a power component 426 configured to perform power management of the device 400 , a wired or wireless network interface 450 configured to connect the device 400 to a network, and an input-output (I/O) interface 458. The device 400 may operate based on an operating system stored in the memory 432, such as Windows Server™, Mac OS X™, Unix™, Linux™, FreeBSD™ or the like.

In an embodiment, the device 400 may be programmed by one or more application specific integrated circuits (ASICs), digital signal processors (DSPs), digital signal processing devices (DSPDs), programmable logic devices (PLDs), field programmable A gate array (FPGA), controller, microcontroller, microprocessor or other electronic component implementation for performing the methods described above.

In an embodiment, there is also provided a non-transitory computer-readable storage medium having instructions stored thereon, such as the memory 432 including instructions, which may be executed by the processing component 422 of the device 400 to implement the above methods. For example, the non-transitory computer readable storage medium may be ROM, random access memory (RAM), CD-ROM, magnetic tape, floppy disk, optical data storage device, or the like.

It is understandable that "plurality" in the disclosure refers to two or more, and other quantifiers are similar thereto. "And/or" describes the association relationship of associated objects, indicating that there may be three types of relationships. For example, A and/or B may indicate: only A, both A and B and only B. The character "P' generally indicates that the contextual objects are an "or" relationship. The singular forms "a", "said" and "the" are also intended to include the plural unless the context clearly dictates otherwise.

It is understandable that the terms "first", "second", etc. are used to describe various information, but the information should not be limited to these terms. These terms are only used to distinguish information of the same type from one another, and do not imply a specific order or degree of importance. In fact, expressions such as "first" and "second" may be used interchangeably. For example, without departing from the scope of the disclosure, first information may also be called second information, and similarly, second information may also be called first information.

It is understandable that although operations are described in a specific order in the drawings in embodiments of the disclosure, it should not be understood as requiring that these operations be performed in the specific order shown or in a serial order, or that all operations shown are performed to obtain the desired result. In certain circumstances, multitasking and parallel processing may be advantageous.

Other embodiments of the disclosure will be readily apparent to those skilled in the art from consideration of the specification and practice of the disclosure. The disclosure is intended to cover any modification, use or adaptation of the disclosure, and these modifications, uses or adaptations follow the general principles of the disclosure and include common knowledge or conventional technical means in the technical field not disclosed in the disclosure.

It is understandable that the disclosure is not limited to the precise constructions which have been described above and shown in the drawings, and various modifications and changes may be made without departing from the scope thereof. The scope of the disclosure is limited only by the scope of the appended claims.

**Claims**

1. A method for determining a Physical Uplink Control Channel (PUCCH) resource, performed by a terminal, comprising:

   obtaining a PUCCH resource configured in a first Bandwidth Part (BWP), wherein a frequency hopping for PUCCH transmission in the first BWP is configured to be enabled or disabled; and
   determining a Physical Resource Block (PRB) index of a PRB bearing the PUCCH resource.

2. The method of claim 1, wherein the frequency hopping for the PUCCH transmission in the first BWP is configured to be disabled, and determining the PRB index of the PRB bearing the PUCCH resource comprises:

   obtaining first parameters, wherein the first parameters comprise at least one of a PUCCH resource index, a resource amount on the first BWP, a number of cyclic shift sequences, or a PRB resource offset; and
   determining the PRB index of the PRB bearing the PUCCH resource based on the first parameters.

3. The method of claim 2, wherein the first parameters comprise the PUCCH resource index; and obtaining the first parameters comprises:

   obtaining information of a downlink control channel sent by a network device and determining the PUCCH resource index based on the information of the downlink control channel;
   wherein the information of the downlink control channel comprises at least one of information of a control channel element (CCE) occupied by the downlink control channel or PUCCH resource allocation information contained in a Physical Downlink Control Channel (PDCCH).

4. The method of claim 2, wherein the first parameters comprise at least one of the resource amount on the first BWP, the number of cyclic shift sequences or the PRB resource offset; and obtaining the first parameters comprises: obtaining a higher-layer signaling sent by a network device, wherein the higher-layer signaling configures at least one of the resource amount on the first BWP, the number of cyclic shift sequences, or the PRB resource offset.

5. The method of claim 4, wherein the higher-layer signaling configures a first resource configuration set, in which the first resource configuration set comprises a resource configuration set index, a PUCCH format, a first time domain symbol of the PUCCH resource, a number of symbols occupied by the PUCCH resource, a first PRB resource offset and a cyclic shift sequence index.

6. The method of claim 4, wherein the higher-layer signaling configures a second resource configuration set and a second PRB resource offset, in which the second resource configuration set comprises a resource configuration set index, a PUCCH format, a first time domain symbol of the PUCCH resource, a number of symbols occupied by the PUCCH resource, and a cyclic shift sequence index.

7. The method of any one of claims 2 to 6, wherein the first parameters comprise the PUCCH resource index, the number of cyclic shift sequences, and the PRB resource offset.

8. The method of claim 7, wherein the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor r_{PUCCH} / N_{CS} \right\rfloor,$$

where, $\text{Index}_{PRB}$ represents the PRB index, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents a rounding down operation.

9. The method of any one of claims 2 to 6, wherein the first parameters comprise the PUCCH resource index, the resource amount on the first BWP, the number of cyclic shift sequences, and the PRB resource offset.

10. The method of claim 9, wherein the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \left\lfloor r_{PUCCH} / N_{CS} \right\rfloor$$

where, $\text{Index}_{PRB}$ represents the PRB index, $N_{BWP}^{\text{size}}$ represents the resource amount on the first BWP, $RB_{BWP}^{\text{offset}}$ represents the PRB resource offset, $r_{PUCCH}$ represents the PUCCH resource index, $N_{CS}$ represents the number of cyclic shift sequences, and $\lfloor \ \rfloor$ represents a rounding down operation.

11. The method of any one of claims 2 to 10, further comprising: obtaining a second parameter, wherein the second parameter comprises an indicator of the PRB index of the PRB bearing the PUCCH resource.

12. The method of claim 7, 8 or 11, wherein the first BWP is located within a bandwidth range of a second BWP, a difference between a starting position of the first BWP and a starting position of the second BWP is less than a preset threshold, and an indicator of the PRB index of the PRB bearing the PUCCH resource indicates a first preset value.

13. The method of claim 9, 10 or 11, wherein the first BWP is located within a bandwidth range of a second BWP, a difference between an end position of the first BWP and an end position of the second BWP is less than a preset threshold, and an indicator of the PRB index of the PRB bearing the PUCCH resource indicates a second preset value.

14. The method of any one of claims 2 to 13, further comprising: determining the cyclic shift sequence index based on the PUCCH resource index and the number of cyclic shift sequences.

15. The method of claim 14, wherein the cyclic shift sequence index, the PUCCH resource index, and the number of cyclic shift sequences satisfy the following relationship:

$$\text{Index}_{CS} = r_{PUCCH} \bmod N_{CS},$$

where, $\text{Index}_{CS}$ represents the cyclic shift sequence index, $r_{PUCCH}$ represents the PUCCH resource index, and $N_{CS}$ represents the number of cyclic shift sequences.

16. The method of claim 1, wherein the first BWP is at least used for random access, and the PUCCH resource is at least used for bearing a Hybrid Automatic Repeat reQuest (HARQ) feedback of message 4 in a four-step random access and/or bearing a HARQ feedback of message B in a two-step random access.

17. The method of claim 1, wherein the frequency hopping for the PUCCH transmission in the first BWP is configured to be enabled, the PRB index of the PRB bearing the PUCCH resource is same as a PRB index of the PUCCH resource configured in a second BWP;

the second BWP is different from the first BWP, and the frequency hopping for the PUCCH transmission in the second BWP is configured to be enabled by default.

18. A method for determining a Physical Uplink Control Channel (PUCCH) resource, performed by a network device, comprising:

    configuring a PUCCH resource in a first Bandwidth Part (BWP), wherein a frequency hopping for PUCCH transmission in the first BWP is configured to be enabled or disabled; and
    determining a Physical Resource Block (PRB) index of a PRB bearing the PUCCH resource.

19. The method of claim 18, wherein the frequency hopping for the PUCCH transmission in the first BWP is configured to be disabled, and determining the PRB index of the PRB bearing the PUCCH resource comprises:

    sending first parameters, wherein the first parameters comprise at least one of a PUCCH resource index, a resource amount on the first BWP, a number of cyclic shift sequences, or a PRB resource offset; and
    determining the PRB index of the PRB bearing the PUCCH resource based on the first parameters.

20. The method of claim 19, wherein the first parameters comprise the PUCCH resource index; and
    sending the first parameters comprises:

    sending information of a downlink control channel and determining the PUCCH resource index based on the information of the downlink control channel;
    in which the information of the downlink control channel comprises at least one of information of a control channel element (CCE) occupied by the downlink control channel or PUCCH resource allocation information comprised in a Physical Downlink Control Channel (PDCCH).

21. The method of claim 19, wherein the first parameters comprise at least one of the resource amount on the first BWP, the number of cyclic shift sequences, or the PRB resource offset; and
    sending the first parameters comprises:
    sending a higher-layer signaling, wherein the higher-layer signaling configures at least one of the resource amount on the first BWP, the number of cyclic shift sequences, or the PRB resource offset.

22. The method of claim 21, wherein the higher-layer signaling configures a first resource configuration set, in which the first resource configuration set comprises a resource configuration set index, a PUCCH format, a first time domain symbol of the PUCCH resource, a number of symbols occupied by the PUCCH resource, a first PRB resource offset and a cyclic shift sequence index.

23. The method of claim 21, wherein the higher-layer signaling configures a second resource configuration set and a second PRB resource offset, in which the second resource configuration set comprises a resource configuration set index, a PUCCH format, a first time domain symbol of the PUCCH resource, a number of symbols occupied by the PUCCH resource, and a cyclic shift sequence index.

24. The method of any one of claims 19 to 23, wherein the first parameters comprise the PUCCH resource index, the number of cyclic shift sequences, and the PRB resource offset.

25. The method of claim 24, wherein the PRB index of the PRB bearing the PUCCH resource, the PUCCH resource index, the number of cyclic shift sequences, and the PRB resource offset satisfy the following relationship:

$$\text{Index}_{PRB} = RB_{BWP}^{\text{offset}} + \left\lfloor \mathrm{r}_{PUCCH} / N_{CS} \right\rfloor,$$

where, Index$_{PRB}$ represents the PRB index, $RB_{BWP}^{\text{offset}}$ represents the PRB resource offset, $\mathrm{r}_{PUCCH}$ represents the PUCCH resource index, $N_{CS}$ represents the number of cyclic shift sequences, and $\lfloor \rfloor$ represents a rounding down operation.

26. The method of any one of claims 19 to 23, wherein the first parameters comprise the PUCCH resource index, the resource amount on the first BWP, the number of cyclic shift sequences, and the PRB resource offset.

27. The method of claim 26, wherein the PRB index of the PRB bearing the PUCCH resource, the PUCCH resource index, the resource amount on the first BWP, the number of cyclic shift sequences, and the PRB resource offset satisfy the following relationship:

$$\text{Index}_{PRB} = N_{BWP}^{\text{size}} - 1 - RB_{BWP}^{\text{offset}} - \lfloor r_{PUCCH} / N_{CS} \rfloor,$$

where, $\text{Index}_{PRB}$ represents the PRB index, $N_{BWP}^{\text{size}}$ represents the resource amount on the first BWP, $RB_{BWP}^{\text{offset}}$ represents the PRB resource offset, $r_{PUCCH}$ represents the PUCCH resource index, $N_{CS}$ represents the number of cyclic shift sequences, and $\lfloor \rfloor$ represents a rounding down operation.

28. The method of any one of claims 19 to 27, further comprising:
sending a second parameter, wherein the second parameter comprises an indicator of the PRB index of the PRB bearing the PUCCH resource.

29. The method of claim 24, 25 or 28, wherein the first BWP is located within a bandwidth range of a second BWP, a difference between a starting position of the first BWP and a starting position of the second BWP is less than a preset threshold, and an indicator of the PRB index of the PRB bearing the PUCCH resource indicates a first preset value.

30. The method of claim 26, 27 or 28, wherein the first BWP is located within a bandwidth range of a second BWP, a difference between an end position of the first BWP and an end position of the second BWP is less than a preset threshold, and an indicator of the PRB index of the PRB bearing the PUCCH resource indicates a second preset value.

31. The method of any one of claims 19 to 30, further comprising:
determining the cyclic shift sequence index based on the PUCCH resource index and the number of cyclic shift sequences.

32. The method of claim 31, wherein the cyclic shift sequence index, the PUCCH resource index, and the number of cyclic shift sequences satisfy the following relationship:

$$\text{Index}_{CS} = r_{PUCCH} \bmod N_{CS}$$

where, $\text{Index}_{CS}$ represents the cyclic shift sequence index, $r_{PUCCH}$ represents the PUCCH resource index, and $N_{CS}$ represent the number of cyclic shift sequences.

33. The method of claim 18, wherein the first BWP is at least used for random access, and the PUCCH resource is at least used for bearing a Hybrid Automatic Repeat reQuest (HARQ) feedback of message 4 in a four-step random access and/or for bearing a HARQ feedback of message B in a two-step random access.

34. The method of claim 18, wherein the frequency hopping for the PUCCH transmission in the first BWP is configured to be enabled, the PRB index of the PRB bearing the PUCCH resource is same as a PRB index of the PUCCH resources configured in a second BWP; the second BWP is different from the first BWP, and the frequency hopping for the PUCCH transmission in the second BPW is configured to be enabled by default.

35. An apparatus for determining a Physical Uplink Control Channel (PUCCH) resource, applied to a terminal, comprising:

an obtaining unit, configured to obtain a PUCCH resource configured in a first Bandwidth Part (BWP), wherein a frequency hopping for PUCCH transmission in the first BWP is configured to be enabled or disabled; and
a processing unit, configured to determine a Physical Resource Block (PRB) index of a PRB bearing the PUCCH resource.

36. An apparatus for determining a Physical Uplink Control Channel (PUCCH) resource, applied to a network device, comprising:

a sending unit, configured to configure a PUCCH resource in a first Bandwidth Part (BWP), in which a frequency hopping for PUCCH transmission in the first BWP is configured to be enabled or disabled; and
a processing unit, configured to determine a Physical Resource Block (PRB) index of a PRB bearing the PUCCH resource.

37. A device for determining a Physical Uplink Control Channel (PUCCH) resource, comprising:

a processor; and
a memory for storing processor-executable instructions;
wherein the processor is configured to perform the method of any one of claims 1 to 17.

38. A device for determining a Physical Uplink Control Channel (PUCCH) resource, comprising:

a processor; and
a memory for storing processor-executable instructions;
wherein the processor is configured to perform the method of any one of claims 18 to 34.

39. A storage medium, having instructions stored thereon, wherein when the instructions in the storage medium are executed by a processor of a terminal, the terminal is configured to perform the method of any one of claims 1 to 17.

40. A storage medium, having instructions stored thereon, wherein when the instructions in the storage medium are executed by a processor of a terminal, the terminal is configured to perform the method of any one of claims 18 to 34.

**FIG. 1**

obtain a PUCCH resource configured in a first BWP, in which a frequency hopping for PUCCH transmission in the first BWP is configured to be enabled or disabled

S11

determine a PRB index of a PRB bearing the PUCCH resource

S12

**FIG. 2**

obtain first parameters, the first parameters include at least one of a PUCCH resource index, a resource amount on the first BWP, a number of cyclic shift sequences, or a PRB resource offset

S21

determine the PRB index of the PRB bearing the PUCCH resource based on the first parameters

S22

**FIG. 3**

obtain information of a downlink control channel sent by a network device, the information of the downlink control channel includes at least one of information of a CCE occupied by the downlink control channel or PUCCH resource allocation information contained in a PDCCH

S31

determine the PUCCH resource index based on the downlink control information

S32

**FIG. 4**

obtain a higher-layer signaling sent by a network device, the higher-layer signaling configures at least one of the resource amount on the first BWP, the number of cyclic shift sequences, or the PRB resource

S41

**FIG. 5**

obtain a first resource configuration set, the first resource configuration set includes a first resource configuration set index, a PUCCH format, a first time domain symbol of the PUCCH resource, a number of symbols occupied by the PUCCH resource, a first PRB resource offset and a cyclic shift sequence index

S41a

**FIG. 6**

obtain a second resource configuration set and a second PRB resource offset, the second resource configuration set includes a resource configuration set index, a PUCCH format, a first time domain symbol of the PUCCH resource, a number of symbols occupied by the PUCCH resource, and a cyclic shift sequence index

S41b

**FIG. 7**

S51

obtain a second parameter, the second parameter includes an indicator of the PRB index of the PRB bearing the PUCCH resource

**FIG. 8**

S61

obtain an indicator of the PRB index of the PRB bearing the PUCCH resource, the indicator indicates a first preset value

S62

determine the PRB index of the PRB bearing the PUCCH resource based on the PUCCH resource index, the number of cyclic shift sequences, and the PRB resource offset

**FIG. 9**

S71

obtain an indicator of the PRB index of the PRB bearing the PUCCH resource, the indicator indicates a second preset value

S72

determine the PRB index of the PRB bearing the PUCCH resource based on the PUCCH resource index, the resource amount on the first BWP, the number of cyclic shift sequences, and the PRB resource offset

**FIG. 10**

S81

configure a PUCCH resource in a first BWP, a frequency hopping transmission for the PUCCH resource in the first BWP is configured to be enabled or disabled

S82

determine a PRB index of a PRB bearing the PUCCH resource

**FIG. 11**

S91

send first parameters, the first parameters includes at least one of a PUCCH resource index, a resource amount on the first BWP, a number of cyclic shift sequences, or a PRB resource offset

S92

determine the PRB index of the PRB bearing the PUCCH resource based on the first parameters

**FIG. 12**

S101

send a second parameter, the second parameter includes an indicator of the PRB index of the PRB bearing the PUCCH resource

**FIG. 13**

100

```
┌─────────────────────────────────┐
│                                 │ ⟋ 101
│        obtaining unit           │
│                                 │
└─────────────────────────────────┘
                 │
                 │
┌─────────────────────────────────┐
│                                 │ ⟋ 102
│        processing unit          │
│                                 │
└─────────────────────────────────┘
```

**FIG. 14**

200

```
┌─────────────────────────────────┐
│                                 │ ⟋ 201
│         sending unit            │
│                                 │
└─────────────────────────────────┘
                 │
                 │
┌─────────────────────────────────┐
│                                 │ ⟋ 202
│        processing unit          │
│                                 │
└─────────────────────────────────┘
```

**FIG. 15**

**FIG. 16**

<u>400</u>

| | |
|---|---|
| 422 — processing component | power component — 426 |

| | |
|---|---|
| 432 — memory | network interface — 450 |

I/O interface — 458

**FIG. 17**

## INTERNATIONAL SEARCH REPORT

| International application No. |
|---|
| **PCT/CN2021/129061** |

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT; ENTXTC; WPABS; CNKI; 3GPP: 低能力, 终端, 部分带宽, 开, 关, 启用, 禁用, 调频, 物理资源块, 索引, 序号, 频率位置, reduced capability, RedCap, NR-lite, UE, terminal, BWP, PUCCH, on, off, PRB, index, hop+

### C. DOCUMENTS CONSIDERED TO BE RELEVANT

| Category* | Citation of document, with indication, where appropriate, of the relevant passages | Relevant to claim No. |
|---|---|---|
| X | US 2021029731 A1 (INTEL CORP.) 28 January 2021 (2021-01-28) claims 1-20, and description, paragraphs 25-237 | 1-40 |
| A | US 2021068148 A1 (PANASONIC INTELLECTUAL PRPERTY CORPORATION OF AMERICA) 04 March 2021 (2021-03-04) entire document | 1-40 |
| A | US 2019297618 A1 (LG ELECTRONICS INC.) 26 September 2019 (2019-09-26) entire document | 1-40 |
| A | US 2021298048 A1 (INTEL CORP.) 23 September 2021 (2021-09-23) entire document | 1-40 |
| A | US 2021037605 A1 (KUNDU, L. et al.) 04 February 2021 (2021-02-04) entire document | 1-40 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 May 2022** | **27 May 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

### INTERNATIONAL SEARCH REPORT
#### Information on patent family members

| International application No. |
|---|
| **PCT/CN2021/129061** |

| Patent document cited in search report | | | Publication date (day/month/year) | Patent family member(s) | | | Publication date (day/month/year) |
|---|---|---|---|---|---|---|---|
| US | 2021029731 | A1 | 28 January 2021 | None | | | |
| US | 2021068148 | A1 | 04 March 2021 | BR | 112020012282 | A2 | 24 November 2020 |
| | | | | WO | 2019136709 | A1 | 18 July 2019 |
| | | | | CN | 111512573 | A | 07 August 2020 |
| | | | | JP | 2021510462 | A | 22 April 2021 |
| | | | | KR | 20200107940 | A | 16 September 2020 |
| | | | | RU | 2743955 | C1 | 01 March 2021 |
| | | | | EP | 3738224 | A1 | 18 November 2020 |
| US | 2019297618 | A1 | 26 September 2019 | EP | 3664349 | A1 | 10 June 2020 |
| | | | | KR | 20190123814 | A | 01 November 2019 |
| | | | | KR | 20190099387 | A | 27 August 2019 |
| | | | | US | 2020137742 | A1 | 30 April 2020 |
| | | | | JP | 2020532921 | A | 12 November 2020 |
| | | | | CN | 111373689 | A | 03 July 2020 |
| | | | | US | 2020137743 | A1 | 30 April 2020 |
| | | | | WO | 2019160364 | A1 | 22 August 2019 |
| US | 2021298048 | A1 | 23 September 2021 | None | | | |
| US | 2021037605 | A1 | 04 February 2021 | None | | | |

Form PCT/ISA/210 (patent family annex) (January 2015)